(19) Europäisches Patentamt / European Patent Office / Office européen des brevets

(11) **EP 2 901 611 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **13766900.8**

(22) Anmeldetag: **23.09.2013**

(51) Int Cl.:
*H04L 9/00* (2006.01)

(86) Internationale Anmeldenummer:
**PCT/EP2013/002859**

(87) Internationale Veröffentlichungsnummer:
**WO 2014/048556 (03.04.2014 Gazette 2014/14)**

(54) **SEITENKANALGESCHÜTZTE MASKIERUNG**

SIDE-CHANNEL-PROTECTED MASKING

MASQUAGE PROTÉGÉ CONTRE L'ATTAQUE PAR OBSERVATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2012 DE 102012018924**

(43) Veröffentlichungstag der Anmeldung:
**05.08.2015 Patentblatt 2015/32**

(73) Patentinhaber: **Giesecke+Devrient Mobile Security GmbH**
**81677 München (DE)**

(72) Erfinder: **PULKUS, Jürgen**
**80469 München (DE)**

(56) Entgegenhaltungen:
• **ANH-TUAN HOANG ET AL: "Intra-masking dual-rail memory on LUT implementation for tamper-resistant AES on FPGA", PROCEEDINGS OF THE ACM/SIGDA INTERNATIONAL SYMPOSIUM ON FIELD PROGRAMMABLE GATE ARRAYS, FPGA '12, 22. Februar 2012 (2012-02-22), - 24. Februar 2012 (2012-02-24), Seite 1, XP055093212, New York, New York, USA DOI: 10.1145/2145694.2145696 ISBN: 978-1-45-031155-7**
• **RAHAMAN M Z ET AL: "Side channel attack prevention for AES smart card", COMPUTER AND INFORMATION TECHNOLOGY, 2008. ICCIT 2008. 11TH INTERNATIONAL CONFERENCE ON, IEEE, PISCATAWAY, NJ, USA, 24. Dezember 2008 (2008-12-24), Seiten 376-380, XP031442993, ISBN: 978-1-4244-2135-0**

## Beschreibung

Die Erfindung betrifft ein Verfahren zum Durchführen einer kryptographischen Berechnung unter Verwendung eines kryptographischen Schlüssels, das gegen Ausspähen des Schlüssels über Seitenkanalangriffe geschützt ist.

Kryptographische Berechnungen werden z.B. von allgemeinen Prozessoren (CPUs) durchgeführt, alternativ häufig von Krypto-Coprozessoren, die den allgemeinen Prozessoren zugeordnete spezielle Prozessoren sind. Insbesondere Chipkarten für Zahlungsverkehr- oder Mobilfunkanwendungen haben häufig Prozessoren (CPUs) mit Krypto-Coprozessoren. Viele Chipkarten für Zahlungsverkehr- oder Mobilfunkanwendungen haben speziell für DES oder AES ausgelegte Krypto-Coprozessoren (siehe nächster Absatz).

Durch eine kryptographische Berechnung werden Eingangsdaten unter Verwendung eines geheimen Schlüssels zu Ausgangsdaten verarbeitet, z.B. Klartextdaten (Eingangsdaten) mit einem Schlüssel zu Chiffredaten (Ausgangsdaten) verschlüsselt oder umgekehrt Chiffredaten (Eingangsdaten) mit einem Schlüssel zu Klartextdaten (Ausgangsdaten) entschlüsselt. Beispiele für symmetrische (Verschlüsselungs-Schlüssel = Entschlüsselungs-Schlüssel) kryptographische Berechnungen sind die Algorithmen DES (Data Encryption Standard) und AES (Advanced Encryption Standard).

Beim AES, der in mehrere Runden (z.B. 10,12 oder 14) unterteilt ist, werden die Eingangsdaten und der Schlüssel in Blöcke unterteilt und blockweise verarbeitet. Innerhalb jeder Runde werden die Daten byteweise verarbeitet, so dass im Detail jeweils ein Eingangsdatenbyte (Klartextbyte bei Verschlüsselung bzw. Chiffretextbyte bei Entschlüsselung) mit einem Schlüsselbyte verarbeitet wird.

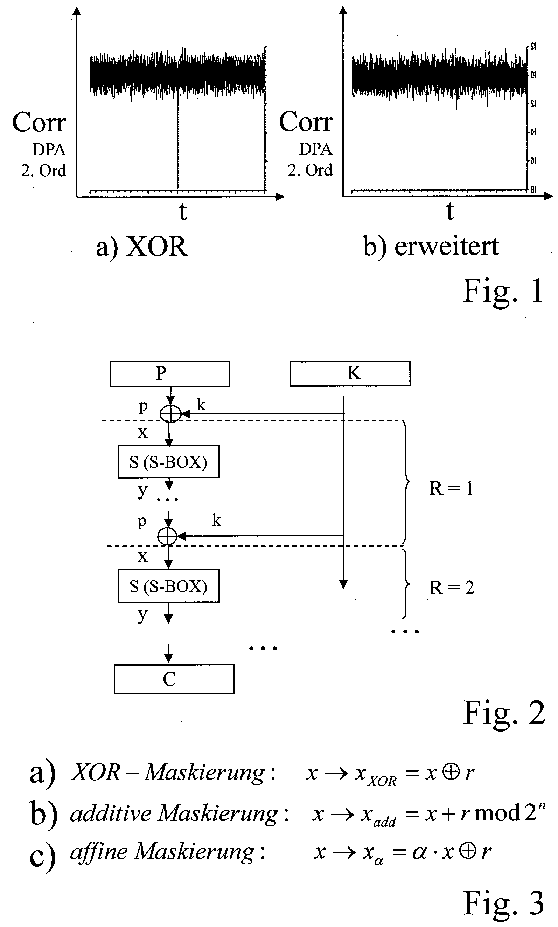

So wird z.B. bei einer AES Verschlüsselung, die in Fig. 2 auszugsweise schematisch gezeigt ist, ein Klartext P mit einem Schlüssel K zu einem Chiffretext C verschlüsselt. Der Klartext P = pp...ppp besteht aus einer Folge von Klartextbytes p, der Schlüssel K = kk...kkk aus einer Folge von Schlüsselbytes k. Am Eingang jeder Runde (in Fig. 2 auszugsweise gezeigt sind die ersten beiden Runden R=1 und R=2) wird eine Teilberechnung durchgeführt, anhand der später beispielhaft ein DPA Angriff beschrieben wird. Bei der Teilberechnung wird ein Klartextbyte p mit einem Schlüsselbyte k verxort ($p \oplus k$), das Ergebnis der Verxorung in eine (Substitutions-) Tabelle S (S-Box) eingesetzt und hierdurch durch einen Tabellenzugriff auf die Tabelle S ein Zwischenwert $x=S[p \oplus k]$ berechnet. Der Zwischenwert x wird innerhalb der Runde weiteren Rechenschritten wie ShiftRow, MixColumn zugeführt, die in Fig. 2 nicht gezeigt sind. Schlüsselexpansionen und Auswahl von Schlüsselbits, die bei AES durchgeführt werden, sind in Fig. 2 ebenfalls nicht gezeigt. Tabellenzugriffe sind besonders gefährdet durch DPA Angriffe.

Da der Stromverbrauch eines Prozessors (z.B. in einer Chipkarte) von den verarbeiteten Daten abhängt, sind auf Prozessoren implementierte kryptographische Berechnungen anfällig gegenüber Seitenkanalangriffen, bei denen der zeitaufgelöste Stromverbrauch des Prozessors während der Durchführung der Berechnung gemessen wird. Meistens ist der Stromverbrauch genauer vom Hamminggewicht der Daten abhängig, d.h. von der Anzahl Einsen in den Daten in der Binärdarstellung. Der Stromverbrauch des Prozessors während der Durchführung der Berechnung, aufgezeichnet gegenüber der während der Berechnung verstrichenen Zeit, wird als Stromkurve bezeichnet. Stromkurven eines Prozessors für eine Berechnung werden beispielsweise mittels eines Oszilloskops aufgezeichnet.

Bei einem DPA (Differential Power Analysis) Angriff, teilweise auch Correlation Power Attack (CPA) genannt, wird eine Mehrzahl von Stromkurven (z.B. ungefähr 1000) für stets die gleiche Berechnung aufgezeichnet und synchronisiert. Bei der Berechnung werden mit bekannten Eingangsdaten und einem geheimen Schlüssel Ausgangsdaten berechnet. Für jeden möglichen Wert des Schlüssels wird eine zeitaufgelöste Korrelationskurve zwischen den synchronisierten Stromkurven und dem Hamminggewicht HW der mit dem jeweiligen Schlüssel erzielten Ausgangsdaten berechnet. Die Korrelationskurven für falsche Schlüssel bestehen aus einem mehr oder weniger gleichmäßigen Rauschen, ähnlich wie die in Fig. 1b gezeigte Korrelationskurve. Die Korrelationskurve für den Schlüssel, mit dem die Berechnung durchgeführt wurde, hat an einem zuvor unbekannten Zeitpunkt eine statistische Auffälligkeit in Form eines Ausschlags ("Peaks"), ähnlich wie die in Fig. 1a gezeigte Korrelationskurve.

Bei einem DPA Angriff höherer (zweiter, dritter, vierter,...) Ordnung werden Stromkurven an mehreren (zwei, drei, vier,...) Zeitpunkten im zeitlichen Ablauf der Berechnung aufgenommen. [PRB10] beschreibt eine DPA Angriff zweiter Ordnung.

Bei einem DPA Angriff auf die Teilberechnung des AES aus Fig. 2 wird ein Klartextbyte p des bekannten Schlüssels K mit einem Schlüsselbyte k des geheimen Schlüssels K verxort ($p \oplus k$), das Ergebnis der Verxorung in die 256-Byte Substitutionstabelle S (S-Box) eingesetzt und hierdurch durch Tabellenzugriff der Zwischenwert $x=S[p \oplus k]$ berechnet. Der Angreifer zeichnet ungefähr 1000 Stromkurven der Teilberechnung auf, synchronisiert sie und berechnet für jeden möglichen Wert 0,...,255 des Schlüsselbytes k die Korrelationskurve zwischen den synchronisierten gemessenen Stromkurven und dem Hamminggewicht $HW(x)$ des mit dem jeweiligen Schlüsselbyte k berechneten Zwischenwerts x. Die Korrelationskurven für falsche Schlüsselbytes bestehen aus einem mehr oder weniger gleichmäßigen Rauschen, ähnlich wie die in Fig. 1b gezeigte Korrelationskurve. Die Korrelationskurve für das richtige Schlüsselbyte, mit dem die Berechnung durchgeführt wurde, hat an einem zuvor unbekannten Zeitpunkt einen Ausschlag, ähnlich wie die in Fig. 1a gezeigte Korrelationskurve. Dieses Verfahren wird mit jedem Schlüsselbyte k des Schlüssels K durchgeführt, bis der Schlüssel K Byte für Byte rekonstruiert ist.

Gemäß einem firmeninternen unveröffentlichten Stand der Technik wird als Gegenmaßnahme gegen DPA Angriffe die "00/FF-Maskierung" vorgesehen. Hierbei wird ein Zwischenergebnis einer Teilberechnung in der Berechnung zufallsgesteuert entweder direkt berechnet, so dass das Zwischenergebnis erzeugt wird, oder komplementiert berechnet, so dass das Einerkomplement des Zwischenergebnisses berechnet wird. Bedarfsweise müssen dabei die Eingangsdaten (Klartext oder Chiffretext) und der Schlüssel komplementiert werden und am Ausgang der Berechnung die Ausgangsdaten (Chiffretext bzw. Klartext) komplementiert werden. Beispielsweise wird also zufallsgesteuert die Berechnung so durchgeführt, dass eine Teilberechnung $x=S[p\oplus k]$ durchgeführt wird, oder eine komplementierende Teilberechnung $\bar{x}=S'[\bar{p}\oplus\bar{k}]$ durchgeführt wird, mit einer einerkomplementierten S-Box $S'[x]=\overline{S[x]}$ und einer komplementierten Klartextbytes und Schlüsselbytes $\bar{p}$, $\bar{k}$. Werden für einen Angriff ungefähr 1000 Durchführungen der kryptographischen Berechnung durchgeführt, wird statistisch in je der Hälfte mit dem Zwischenwert $x$ und dem Einerkomplement $\bar{x}$ gerechnet. Für das Hamminggewicht $HW(\bar{x})$ der komplementierenden Teilberechnung $\bar{x}=S'[\bar{p}\oplus\bar{k}]$ gilt die Formel $HW(\bar{x})=8-HW(x)$, in der das Hamminggewicht $HW(\bar{x})$ der nicht-komplementierten Berechnung mit negativem Vorzeichen vorkommt. Hierdurch heben sich bei Zufallssteuerung im Mittel Korrelationen zwischen den Stromkurven und dem mit dem Schlüssel erzielten Rechenergebnis auf. Somit ergibt sich für zufallsgesteuertes Rechnen mit dem Zwischenwert $x=S[p\oplus k]$ oder dem komplementierten Zwischenwert $\bar{x}=S'[\bar{p}\oplus\bar{k}]$ auch beim Rechnen mit dem richtigen Schlüsselbyte eine Korrelationskurve wie die in Fig. 1b gezeigte, wie sie ohne Abwehrmaßnahmen nur für ein falsch geratenes Schlüsselbit entsteht. Die Durchführung der Berechnung zufallsgesteuert mit dem Zwischenwert $x=S[p\oplus k]$ oder dem komplementierten Zwischenwert $\bar{x}=S'[\bar{p}\oplus\bar{k}]$ ist somit resistent gegen den oben beschriebenen DPA-Seitenkanalangriff mit Korrelationsberechnung. Zudem ist die 00/FF-Maskierung sehr speichersparend.

Die Berechnung des 1er-Komplements eines Werts wird wahlweise durch Verxoren des Werts mit hexadezimal FF oder 0xff durchgeführt, die Bereitstellung des Werts selbst wird in diesem Fall wahlweise durch Verxoren mit 0 an derselben Stelle im Berechnungsablauf, an der beim 1er-Komplement mit FF bzw. 0xff komplementiert wird, durchgeführt. Durch Verxoren mit FF wird ein Wert komplementiert. Durch Verxoren mit Null bleibt der Wert unverändert. Durch die Durchführung einer Verxorung in beiden Fällen wird verschleiert, wann der Wert und wann das 1er-Komplement des Werts verwendet wird. Aus dieser Art der Durchführung der Zufallssteuerung resultiert der Name "00/FF-Maskierung".

Bei einem variierten DPA Angriff wird statt der Korrelation eine andere Statistik berechnet, beispielsweise die Varianz oder eine eindimensionale Kolmogorov-Smirnov Statistik. Hierdurch mitteln sich die statistischen Auffälligkeiten bei Verwendung des richtigen Schlüsselbytes auch dann nicht heraus, wenn zufallsgesteuert mit dem Zwischenwert $x=S[p\oplus k]$ oder dem komplementierten Zwischenwert $\bar{x}=S'[\bar{p}\oplus\bar{k}]$ gerechnet wird. Somit ist dennoch erkennbar, wann mit dem richtigen Schlüssel gerechnet wird.

Eine weitere Gegenmaßnahme gegen DPA Angriffe besteht in der XOR-Maskierung, die beispielsweise in DE 198 22 217 A1 beschrieben ist, und wobei statt Eingangsdaten E mit einer Zufallszahl r verxorte Eingangsdaten $E'=E\oplus r$ verarbeitet werden.

Bei der XOR-Maskierung ist es wichtig, dass stets alle Zwischenwerte maskiert sind. Wird unvorsichtig maskiert, ist dies nicht der Fall. Wird beim AES in einer Teilberechnung, z.B. derjenigen aus Fig. 2, eine Verschlüsselung eines maskierten Klartextbytes $p'=p\oplus r$ mit einem maskierten Schlüsselbyte $k'=k\oplus r$ durchgeführt, ergibt sich $(p\oplus r)\oplus(k\oplus r)=p\oplus k=x,$ also ein unmaskiertes Verschlüsselungsergebnis bzw. Zwischenergebnis x. Dass alle Zwischenergebnisse maskiert sind, und niemals unmaskierte Zwischenergebnisse auftreten, wird beispielsweise durch unterschiedliche Maskierung von Eingangsdaten und Schlüssel erreicht. Beispielsweise werden die Eingangsdaten (Klartext oder Chiffretext) mit zwei Zufallszahlen r, s maskiert, der Schlüssel mit nur einer Zufallszahl r maskiert und eine Kompensationsmaskierung durchgeführt. Beispielsweise wird die Maskierung durchgeführt gemäß $(((p\oplus r)\oplus s)\oplus(k\oplus r))\oplus(r\oplus s)=p\oplus k\oplus r=x\oplus r=x_{XOR}$. Das Klartextbyte p wird also mit r und s maskiert, das Schlüsselbyte wird nur mit s maskiert, und zudem die Kompensationsmaskierung mit beiden Zufallszahlen r, s durchgeführt. Hierdurch taucht statt des Zwischenergebnisses x ein mit r maskiertes Zwischenergebnis $x_{XOR}=x\oplus r$ auf, vgl. Fig. 3. Eine Berechnung mit sorgfältiger XOR-Maskierung ist resistent gegen den oben beschriebenen DFA Angriff, unabhängig von der verwendeten Statistik (z.B. Korrelation, Varianz, eindimensionale Kolmogorov-Smirnov Statistik). Das Zwischenergebnis der Teilberechnung aus Fig. 2 wird berechnet gemäß $S'[x]=S[x\oplus r]\oplus r$. Hieraus ist ersichtlich, dass für jeden Wert der Zufallszahl r eine eigene Substitutionstabelle (S-Box) S' benötigt wird. Wahlweise wird für jeden möglichen Wert der Zufallszahl r eine mit r maskierte Substitutionstabelle (S-Box) S' abgespeichert (z.B. in der Chipkarte bzw. dem Prozessor), also bei einer 256 Byte großen Substitutionstabelle (S-Box) z.B. 256 verschiedene 256-Byte-Tabellen. Alternativ wird die Substitutionstabelle (S-Box) erst nach der Festlegung der Zufallszahl r berechnet, vorzugsweise in einem dem Prozessor zugeordneten Arbeitsspeicher RAM. Dies kostet allerdings Rechenzeit und ggf. Speicherplatz im Arbeitsspeicher RAM. Im Verlauf der Durchführung des Algorithmus, z.B. des AES, und sobald die Zufallszahl festgelegt ist, wird dagegen stets dieselbe Substitutionstabelle verwendet. Beim Beispiel aus Fig. 2 wird also für alle Klartextbytes p des Klartexts P und Schlüsselbytes k des Schlüssels K dieselbe Substitutionstabelle verwendet. Hierdurch sind bei der Teilberechnung aus Fig. 2, durchgeführt für unterschiedliche Klartextbytes p, p' und Schlüsselbytes k, k', d.h. an unterschiedlichen Zeitpunkt t, t' im AES, der berechnete Zwischenwert $x_{XOR}=S[p{\oplus}k]{\oplus}r$ bzw. $x'_{XOR}=S[p'{\oplus}k']{\oplus}r$ durch dieselbe Zugriffszahl r maskiert, was einen Schwachpunkt darstellt.

Die Tatsache, dass bei der XOR-Maskierung bei allen Tabellenaufrufen dieselbe Tabelle (z.B. AES S-Box) verwendet wird, kann für einen DPA Angriff höherer Ordnung genutzt werden, wie er für AES z.B. in [PRB10] beschrieben ist. Beim DPA Angriff zweiter Ordnung aus [PRB10] wird der Stromverbrauch $j(t)$, $j(t')$ an zwei Zeitpunkten t, t' gemessen und normiert zu $\bar{j}(t)$, $\bar{j}(t')$. Die Korrelation zwischen dem Produkt $\bar{j}(t){\cdot}\bar{j}(t')$ und dem Hamminggewicht des Werts $x{\oplus}x'=S[p{\oplus}k]{\oplus}S[p'{\oplus}k']$ wird für jedes mögliche Schlüsselpaar $k$, $k'$ und jede Paar von Zeitpunkten $t$, $t'$ dazu berechnet. Für den richtigen Schlüssel ergibt sich eine Korrelationskurve wie die in Fig. 1a gezeigte, mit dem signifikanten Ausschlag an einem Zeitpunkt. Der Rechenaufwand für den Angriff zweiter Ordnung aus [PRB10] steigt mit der Anzahl zu berücksichtigender Zeitpunkte und Schlüssel quadratisch an und ist somit erheblich.

Eine weitere Gegenmaßnahme gegen DFA Angriffe, die z.B. beschrieben ist in WO 01/31422 A2, ist die affine Maskierung, die eine Variation der XOR-Maskierung ist und darauf abzielt, eine kryptographische Berechnung gegen DPA Angriffe höherer Ordnung zu schützen. Bei der affinen Maskierung gemäß WO-01/31422-A2 wird die Maskierung für Daten variiert, indem mit Zufallsdaten maskierte Daten vor jeder Benutzung mit für jede Benutzung zufällig ausgewählten weiteren Zufallsdaten maskiert werden. Als Daten können beispielsweise geheime Daten (z.B. Schlüssel) oder Zwischendaten vorgesehen sein. Die Teilberechnung aus Fig. 2 mit affiner Maskierung liefert statt eines Zwischenergebnisses x ein Zwischenergebnis $x_\alpha=\alpha{\cdot}x{\oplus}r$.

EP 2 302 552 A1 beschreibt ein Verfahren zur Durchführung eines kryptographischen Algorithmus, das durch eine affine Maskierung geschützt ist, mit dem Ziel, DPA Angriffe höherer Ordnung (höher als 1) abzuwehren. Dabei werden Geheimdaten oder Zwischenergebnisse x des Algorithmus unter Verwendung einer invertierbaren binären Zufallsmatrix R und einer Zufallszahl r gemäß $m(x)=R{\cdot}x{\oplus}r$ maskiert.

Auch auf Berechnungen mit affiner Maskierung werden DPA Angriffe durchgeführt. Diese bauen auf dem Zusammenhang auf, dass falls für zwei Zwischenwerte x, x' der Berechnung x = x' ist, auch $\alpha{\cdot}x{\oplus}r = \alpha{\cdot}x'{\oplus} r$ ist, und umgekehrt. Mittels Korrelationsbildung oder anderer statistischer Methoden über Stromkurven, die an einer affin maskierten Berechnung aufgezeichnet wurden, lässt sich ermitteln, ob zwei maskierte Zwischenwerte $x_\alpha$, $x'_\alpha$ übereinstimmen oder nicht. Die unmaskierten Zwischenwerte x, x' stimmen dann entsprechend überein oder nicht.

Eine denkbare, vergleichsweise sichere Maßnahme gegen DPA Angriffe höherer Ordnung ist, jeden Zwischenwert in mehrere Teile zu zerlegen. Ein Beispiel hierfür ist die XOR-Maskierung zweiter Ordnung, bei der für jeden Zwischenwert x zwei Zufallszahlen r, s festgelegt werden und Berechnungen stets nur mit $x{\oplus}r{\oplus}s$, r und s durchgeführt werden, dagegen nicht mit dem unmaskierten Wert x oder einfach maskierten Werten $x{\oplus}r$, $x{\oplus}s$, $r{\oplus}s$. Eine solche Zerlegung erhöht den Aufwand für die Implementierung der Berechnung und die Rechenzeit der Berechnung erheblich.

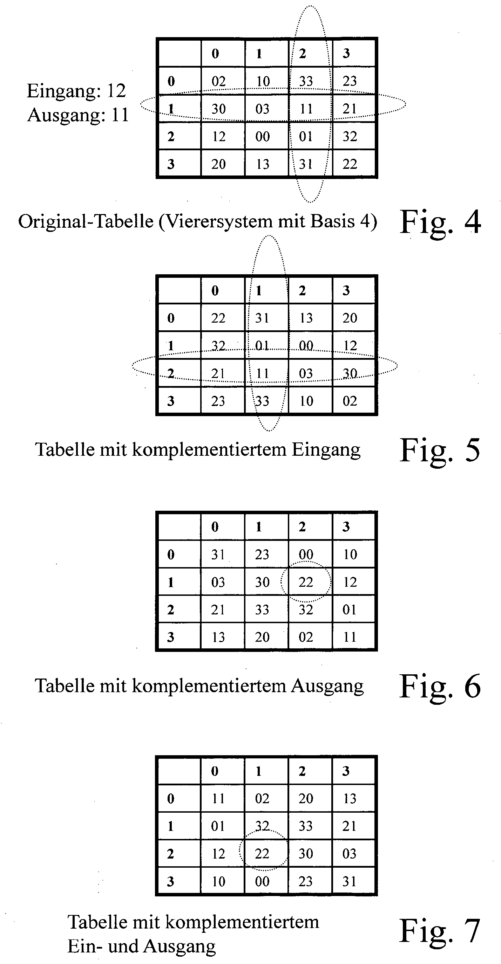

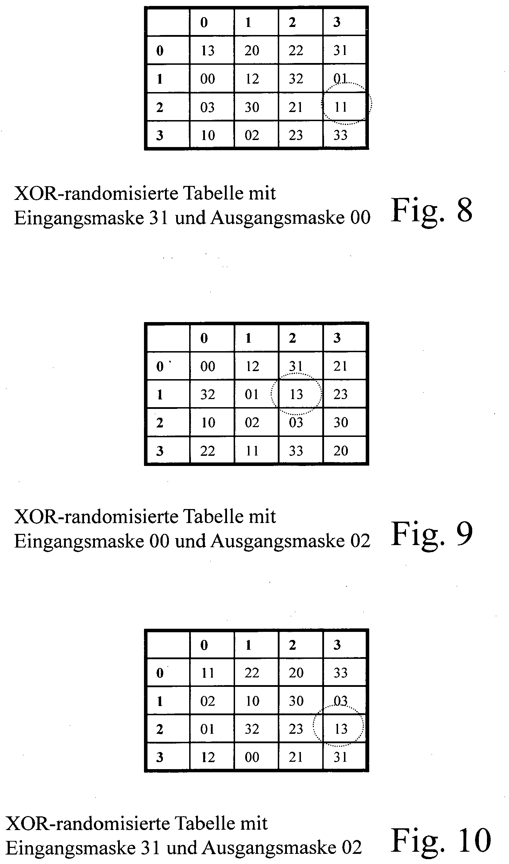

Für eine Berechnung, bei der maskierte Tabellen (z.B. XOR-maskierte) verwendet werden-beispielsweise AES mit den S-Boxen als Tabellen - gibt es generische Maßnahmen gegen DPA Angriffe, wobei Tabellenzugriffe verschleiert werden. Beispielsweise kann vor jedem Tabellenaufruf aus einer Tabelle die Tabelle im Arbeitsspeicher (RAM) des rechnenden Prozessors neu erzeugt werden, mit einer neuen (XOR-) Maskierung mit einem neuen Maskierungsparameter, z.B. mit einer neuen Zufallszahl. Hierbei muss bei jedem einzelnen Tabellenaufruf eine neue Maskierungsoperation durchgeführt werden, mit der z.B. eine Tabelle wie die Fig. 4 gezeigte, in eine Tabelle wie die in Fig. 10 gezeigte übergeführt wird. Bei einer herkömmlichen XOR-Maskierung wird, wie weiter oben gesagt, zu Beginn der Berechnung (z.B. AES) eine XOR-maskierte Tabelle berechnet, und für alle Tabellenaufrufe innerhalb der Berechnung (z.B. AES) dieselbe Tabelle verwendet. Für jeden Tabellenaufruf eine neue XOR-maskierte Tabelle zu berechnen erhöht demgegenüber den Rechenaufwand so weit, dass die Laufzeit der Berechnung für z.B. Chipkarten inakzeptabel wird.

Alternativ können für jeden Tabellenaufruf, um einen einzigen Tabellenwert zu ermitteln, alle Tabelleneinträge ausgewertet werden und nur der richtige behalten werden. Die Rechenzeit der Berechnung kann sich durch solche generischen Maßnahmen auf in etwa das Hundertfache erhöhen, was z.B. für Chipkarten inakzeptabel ist.

Der Artikel [SP06] beschreibt Maskierungen für Tabellen gegen DPA Angriffe höherer Ordnung, die für AES Tabellen und andere Tabellen geeignet sind. Im Artikel [RDP08] sind Maßnahmen zum Schutz von Tabellen gegen Seitenkanalangriffe höherer Ordnung beschrieben. Der Vollständigkeit halber werden die Artikel [GPQ11] und [KHL11] erwähnt, in denen spezielle Verfahren für die Verschleierung von Tabellenzugriffen beim AES beschrieben sind. [GPQ11] beschreibt Inversion mittels einer Exponentiation unter Verwendung der Gleichheit $x^{-1}= x^{254}$ in $F_{256}^x$). In [KHL11] sind Verwandeln einer XOR- in eine multiplikative Maskierung vor der Inversion und Rückverwandeln nach der Inversion unter Verwendung von $(\alpha{\cdot}x)=\alpha^{-1}{\cdot}x^{-1}$ beschrieben, sowie Rückführung der Inversion in $F_{256}$ auf den Teilkörper $F_{16}$ und der Inversion von 2x2 Matrizen über $F_{16}$.

Das Dokument Anh-Tuan Hoang et al: "Intra-masking dual-rail memory on LUT implementation for tamper-resistant AES on FPGA", FPGA'12, 2012-01-01 offenbart eine Speichereinrichtungs-Hardware mit einer maskierten Dual-Rail Pre-Charge Logik MDPL. Die Logik umfasst zwei parallel betriebene komplementäre Rails, deren Stromverbrauch sich bei jedem logischen Schaltvorgang gegenseitig kompensiert. Hierdurch sind logische Schaltvorgänge in der Logik gegen Seitenkanalangriffe, die auf Analyse des Stromverbrauchs beruhen, geschützt. Die Logik wird eingesetzt für ein Verfahren zum Durchführen einer kryptographischen Berechnung, genauer AES, an zunächst maskierten Zwischenwerten, wobei ein Maskenwechsels von einer alten Maske "old_mask" zu einer neuen Maske "new_mask" erfolgt. Gemäß Fig. 4 und Kap. 4 werden mit einer Maske "old_mask" maskierte Zwischenwerte bereitgestellt, um sie einer S-Box-Operation (Rail 1) und einer komplementären S-Box-Operation (Rail 2) zuzuführen. Vor der S-Box-Operation und der komplementären S-Box-Operation wird die Maskierung entfernt ("Unmask and pre-charge module"), so dass unmaskierte Zwischenwerte in die S-Box-Operation (Rail 1) und die komplementäre S-Box-Operation (Rail 2) eingehen. Nach der S-Box-Operation (Rail 1) und komplementären S-Box-Operation (Rail 2) wird eine neue Maskierung "new_mask" auf die nun durch die S-Box verarbeiteten Zwischenwerte angewandt. Die Masken "old_mask" und "new_mask" sind z.B. Zufallsmasken.

Das Dokument M. Z. Rahaman et al: "Side Channel Attack Prevention for AES Smart Card", Proceedings of 11th International Conference on Computer and Information Technology, ICCIT 2008, 25-27 December, 2008 offenbart eine Gegenmaßnahme zu Seitenkanalattacken, wobei Zwischenwerte einer AES-Berechnung zufällig mit einer Maske oder deren Einerkomplement maskiert werden.

Der Erfindung liegt die Aufgabe zu Grunde, ein Verfahren zum Durchführen einer kryptographischen Berechnung unter Verwendung eines kryptographischen Schlüssels zu schaffen, das gegen Ausspähen des Schlüssels über Seitenkanalangriffe, insbesondere DPA Angriffe höherer Ordnung, geschützt ist, so dass die Schlüsselausspähung verhindert ist oder zumindest stark erschwert ist, und das zugleich effizient ist.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 hat vom Grundsatz her die Struktur einer Kombination einer Basismaskierung - z.B. XOR-Maskierung oder affiner Maskierung - und einer 00/FF-Maskierung, angewandt auf eine kryptographische Berechnung, um geheime Daten der Berechnung vor Ausspähung zu schützen. Die erfindungsgemäße Maskierung wird intern bei der Anmelderin auch erweiterte Maskierung genannt.

Das Verfahren nach Anspruch 1 ist zur Ausführung in einem Prozessor (z.B. Mikroprozessor, CPU, Krypto-Coprozessor, Krypto-Beschleuniger) eingerichtet, der zum Durchführen einer kryptographischen Berechnung eingerichtet ist, bei der aus Eingangsdaten unter Verwendung eines kryptographischen Schlüssels und über die Erzeugung von Zwischenwerten Ausgangsdaten erzeugt werden. Ein Beispiel einer solchen kryptographischen Berechnung ist der AES. Bei der Durchführung der Berechnung wird eine Basismaskierung angewandt, durch welche zumindest manche, vorzugsweise alle, Zwischenwerte als maskierte Zwischenwerte in die Berechnung einfließen. Das Verfahren zeichnet sich dadurch aus, dass bei der Durchführung der Berechnung zusätzlich eine Sekundärmaskierung angewandt wird, wobei für jeden mittels der Basismaskierung maskierten Zwischenwert das Einerkomplement des maskierten Zwischenwerts gebildet wird, der maskierte Zwischenwert und das Einerkomplement des maskierten Zwischenwerts bereitgestellt werden und zufallsgesteuert die Berechnung entweder mit dem maskierten Zwischenwert oder mit dem Einerkomplement des maskierten Zwischenwerts durchgeführt wird.

Wie eingangs beschrieben, z.B. mit Verweis auf [PRB10], ist ein Ausspähen des geheimen Schlüssels einer XOR-maskierten kryptographischen Berechnung möglich mit einem DPA Angriff zweiter Ordnung, bei dem der Stromverbrauch $j(t)$, $j(t')$ an zwei Zeitpunkten t, t', d.h. bei zwei unterschiedlichen Rechenschritten innerhalb der Berechnung, gemessen und ausgewertet wird. Bei [PRB10] sind die betrachteten Rechenschritte innerhalb der Berechnung durch Tabellenzugriffe verwirklicht. Der Schwachpunkt, der bei dem Angriff ausgenutzt wird ist, dass an den beiden Zeitpunkten dieselbe Tabelle verwendet wird. Gemäß der Erfindung wird zusätzlich zur Basismaskierung (z.B. XOR) die Sekundärmaskierung angewandt, gemäß der zufallsgesteuert entweder mit dem Zwischenwert oder dem Einerkomplement des Zwischenwerts gerechnet wird. Hierdurch werden Rechenschritte an unterschiedlichen Zeitpunkten im Ablauf der Berechnung, die bei einer reinen XOR-Maskierung gleichartig wären, zufallsgesteuert unterschiedlich gemacht. Für eine als Tabellenzugriff verwirklichte Teilberechnung (Rechenschritt) bedeutet dies, dass für die unterschiedlichen Teilberechnungen - oder gleichbedeutend unterschiedlichen Zeitpunkte - innerhalb der Berechnung zufallsgesteuert unterschiedliche Tabellen verwendet werden. Eine statistische Auswertung des Stromverbrauchs $j(t)$, $j(t')$ an zwei (oder mehr) Zeitpunkten t, t' liefert somit, wie die Anmelderin experimentell bestätigen konnte, keine Information über den bei der Berechnung verwendeten geheimen Schlüssel. Insbesondere liefern Korrelationskurven wie die in Fig. 1 gezeigten auch bei Verwendung des richtigen Schlüssels das mehr oder weniger gleichmäßige Rauschen (vgl. Fig. 1b), das bei Verwendung eines falschen Schlüssels entsteht, nicht aber den prominenten Ausschlag (Fig. 1a), der z.B. bei XOR-Maskierung und dem richtigen Schlüssel zu sehen ist.

Im Vergleich zu dem denkbaren Verfahren, bei XOR-Maskierung für jeden Tabellenaufruf eine neue XOR-Tabelle mit einer neuen XOR-Maske zu berechnen, muss bei der erfindungsgemäßen erweiterten Maskierung nur zu Beginn der Berechnung die Tabelle für den Tabellenzugriff um ein oder mehrere Komplementär-Tabellen erweitert werden (daher der Begriff erweiterte Maskierung). Bei nachfolgenden Tabellenaufrufen kann auf die vorausberechnete erweiterte Tabelle zurückgegriffen werden, ohne Neuberechnung für jeden Tabellenzugriff. Für andere Teilberechnungen (Rechenschritte) als Tabellenzugriffe, z.B. Berechnungen gemäß einer Rechenvorschrift (Operation), bei AES z.B. die Verschiebeoperationen "Shift Row" oder "Mix Column", verhält es sich analog. Zu Beginn der Berechnung wird die Operation (Rechenvorschrift) mit der Basismaskierung maskiert und zumindest eine komplementärmaskierte Operation gebildet. Bei den Teilberechnungen innerhalb der Berechnung wird mit den vorab berechneten maskierten und komplementärmaskierten Operationen gerechnet. Somit ist die erweiterte Maskierung sicher und zugleich effizient.

Daher ist gemäß Anspruch 1 ein Verfahren zum Durchführen einer kryptographischen Berechnung unter Verwendung eines kryptographischen Schlüssels geschaffen, das gegen Ausspähen des Schlüssels über Seitenkanalangriffe, insbesondere DPA Angriffe höherer Ordnung, geschützt ist, so dass die Schlüsselausspähung verhindert ist oder zumindest stark erschwert ist, und das zugleich effizient ist.

Als Berechnung ist wahlweise eine Verschlüsselung, Entschlüsselung, Signaturerzeugung oder Signaturprüfung vorgesehen, wahlweise gemäß einem vorbestimmten Algorithmus wie z.B. AES.

Wahlweise ist als Basismaskierung eine einfache oder mehrfache XOR-Maskierung, oder eine affine Maskierung, oder eine Zerlegungsmaskierung, oder eine Hintereinanderschaltung zweier oder mehrerer der vorgenannten Basismaskierungen vorgesehen.

Wahlweise umfasst die Berechnung eine Teilberechnung, durch die aus einem Eingangswert unter Durchführung eines Tabellenzugriffs auf eine Tabelle, die eine Mehrzahl von Tabelleneinträgen aufweist, ein Zwischenwert erzeugbar ist, wobei zur Durchführung der Berechnung oder zumindest der Teilberechnung

- die Tabelle mit der Basismaskierung maskiert wird zu einer maskierten Tabelle, und
- die maskierte Tabelle mit der Sekundärmaskierung maskiert wird, wobei

  - die maskierte Tabelle komplementiert wird, so dass mindestens eine maskierte Komplementär-Tabelle berechnet wird,
  - die maskierte Tabelle und die mindestens eine maskierte Komplementär-Tabelle bereitgestellt werden und
  - die Teilberechnung dadurch durchgeführt wird, dass der Tabellenzugriff zufallsgesteuert auf entweder die maskierte Tabelle oder die bzw. eine maskierte Komplementär-Tabelle durchgeführt wird.

Die erfindungsgemäße erweiterte Maskierung ist besonders für Teilberechnungen vorteilhaft, die durch Tabellenaufrufe gebildet werden. Gerade bei einem Tabellenaufruf würde eine Neuberechnung der Tabelle für jeden Tabellenaufruf einen erheblichen zusätzlichen Rechenaufwand bedeuten. Im AES ist die relativ aufwändige nichtlineare S-Box-Operation als Tabellenaufruf verwirklicht. Andere, vergleichsweise einfache Teilberechnungen wie z.B. Shift Row oder Mix Column sind durch direkt implementierte Operationen gebildet. Für diese direkt implementierten einfachen Operationen kann es vom Rechenaufwand her vertretbar sein, jede Teilberechnung neu zu maskieren. Folglich ist die Erfindung wahlweise derart umgesetzt, dass Tabellenaufrufe mit der erfindungsgemäßen erweiterten Maskierung maskiert sind und direkt implementierte Operationen mit einer anderen, z.B. stärkeren aber aufwändigeren, Maskierung maskiert sind. Wahlweise sind aufwändige Teilberechnungen - wie z.B. S-Box-Operationen beim AES - mit der erweiterten Maskierung maskiert, und sind vergleichsweise einfache Teilberechnungen - z.B. Shift Row oder Mix Column - durch eine andere, z.B. stärkere aber dafür aufwändigere Maskierung maskiert, z.B. Neumaskierung bei jeder Teilberechnung (Rechenschritt). Alternativ kann auch die gesamte Berechnung erweitert maskiert sein. Teilberechnungen zwischen Tabellenaufrufen sollten zumindest nicht schwächer maskiert sein als Tabellenaufrufe.

Das zufallsgesteuerte Zugreifen auf entweder die maskierte Tabelle oder die bzw. eine maskierte Komplementär-Tabelle wird wahlweise dadurch durchgeführt, dass der Eingangswert zur Erzeugung des Zwischenwerts um einen Tabellenauswahl-Abschnitt erweitert wird, durch den die Tabelle festgelegt ist, auf die zugegriffen wird. Die Länge des Tabellenauswahl-Abschnitts ist passend zur Festlegung der ein oder mehreren Komplementär-Tabellen gewählt. Wird eine einzige Komplementär-Tabelle berechnet, ist der Tabellenauswahl-Abschnitt vorzugsweise ein Bit lang. Werden drei Komplementär-Tabellen berechnet, ist der Tabellenauswahl-Abschnitt vorzugsweise zwei Bit lang (vgl. nachfolgend). Die Bits können wahlweise entweder aufeinanderfolgend sein (z.B. aa) oder zwischen die Bits des Tabelleneingangs eingestreut sein (z.B. xax; axax; etc.; vgl. Beispiele bei den Figuren).

Die Tabelle weist wahlweise einen Tabelleneingang und einen Tabellenausgang auf, und wobei genau eine maskierte Komplementär-Tabelle berechnet wird, bei welcher sowohl der Tabelleneingang als auch der Tabellenausgang komplementiert sind, indem die Positionen der Tabelleneinträge in der Tabelle komplementiert sind (Komplementierung des Eingangs) und die Werte der Tabelleneinträge in der Tabelle komplementiert sind (Komplementierung des Ausgangs).

Wahlweise, alternativ, weist die Tabelle einen Tabelleneingang und einen Tabellenausgang auf, und wobei drei maskierte Komplementär-Tabellen berechnet werden, wobei

- bei einer ersten maskierten Komplementär-Tabelle nur der Tabelleneingang komplementiert ist, indem die Positionen der Tabelleneinträge in der maskierten Tabelle komplementiert sind,
- bei einer zweiten maskierten Komplementär-Tabelle nur der Tabellenausgang komplementiert ist, indem die Werte der Tabelleneinträge in der maskierten Tabelle komplementiert sind, und
- bei einer dritten maskierten Komplementär-Tabelle sowohl der Tabelleneingang als auch der Tabellenausgang komplementiert sind, indem sowohl die Positionen als auch die Werte der Tabelleneinträge in der basismaskierten Tabelle komplementiert sind.

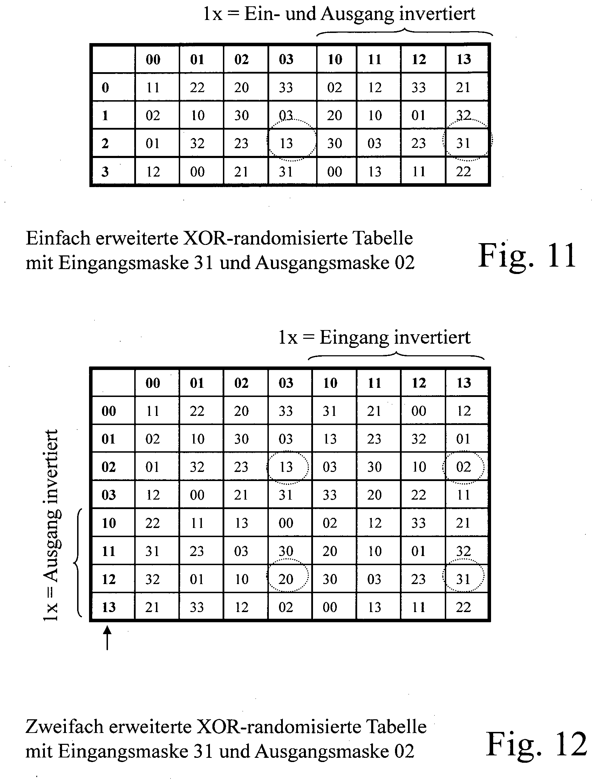

Wahlweise werden die maskierte Tabelle und die mindestens eine (z.B. eine oder alternativ drei) Komplementär-Tabelle(n) in eine einzige erweiterte Tabelle eingetragen, die die Tabelleneinträge der maskierten Tabelle und der mindestens einen Komplementär-Tabelle in einer vorbestimmten Anordnung enthält. Die Anordnung der Tabelleneinträge kann z.B. hintereinander sein (vgl. z.B. Fig. 11,12,16,17, 21, 22, 29, 30), oder alternativ schachbrettartig abwechselnd (ausgehend von den Tabellen aus Fig. 11, 12, 16, 17, 21, 22, 29, 30 schachbrettartige Verwürfelung der Tabelleneinträge, ggf. mit entsprechender Gestaltung der Tabellen-Auswahl-Abschnitte).

Wahlweise sind dem Prozessor ein Permanentspeicher (z.B. ROM, EEPROM, ...) und ein flüchtiger Arbeitsspeicher (z.B. RAM) zugeordnet, wobei die Tabelle im Permanentspeicher abgespeichert ist, und wobei die maskierte Tabelle und die mindestens eine maskierte Komplementär-Tabelle im flüchtigen Arbeitsspeicher berechnet werden. Beispielsweise sind bei AES die originären, unmaskierten S-Boxen im nichtflüchtigen Speicher abgespeichert. Die maskierte Tabelle und ihre Komplementär-Tabelle(n) werden im flüchtigen Speicher berechnet und abgelegt. Insbesondere werden vorzugsweise zu Beginn der Berechnung (z.B. AES) die Tabellen (z.B. S-Boxen) aus dem nichtflüchtigen Speicher in den flüchtigen Speicher geladen, im flüchtigen Speicher die maskierte Tabelle und ihre Komplementär-Tabelle(n) berechnet und im weiteren Verlauf der Berechnung (z.B. AES) stets ein und dieselben zu Beginn der Berechnung (AES) berechneten RAM-Tabellen (maskierte Tabelle und ihre Komplementär-Tabelle(n)) verwendet. Für einen neuen Durchlauf der Berechnung (z.B. AES), z.B. eine neue Verschlüsselung, Entschlüsselung, Signaturberechnung, Signaturverifizierung, werden neue RAM-Tabellen (die maskierte Tabelle und ihre Komplementär-Tabelle(n)) berechnet.

Gemäß einer Ausführungsform wird ein Verfahren angegeben, wobei

- die maskierte Tabelle und mindestens eine Komplementär-Tabelle für eine Mehrzahl von Tabellenzugriffen auf die Tabelle verwendet werden, wahlweise für zumindest eine gesamte Durchführung der kryptographischen Berechnung (z.B. ein Durchlauf des AES), und
- innerhalb der Mehrzahl von Tabellenzugriffen zumindest einmal, vorzugsweise für jeden Tabellenzugriff, neu zufallsgesteuert festgelegt wird, dass die Berechnung bzw. Teilberechnung entweder mit dem maskierten Zwischenwert oder mit dem Einerkomplement des maskierten Zwischenwerts durchgeführt wird, und die Berechnung bzw. Teilberechnung entsprechend dem Festlegen durchgeführt wird.

Insbesondere wird wahlweise zu Beginn der Berechnung (z.B. AES) eine maskierte Tabelle (z.B. S-Box) und ausgehend von der maskierten Tabelle mindestens eine (z.B. genau eine oder genau drei) Komplementär-Tabelle(n) berechnet, z.B. im RAM. Im restlichen Verlauf der Berechnung (z.B. AES) werden die vorausberechneten Tabellen und Komplementär-Tabelle(n) verwendet (z.B. aus dem RAM). Zuvor wird ggf. die unmaskierte Tabelle aus dem nichtflüchtigen Speicher (z.B. ROM) geladen.

Wahlweise weist die Tabelle einen Tabelleneingang und einen Tabellenausgang auf, und wobei die maskierte Tabelle

- entweder einen maskierten Tabelleneingang hat,
- oder einen maskierten Tabellenausgang hat,
- oder einen maskierten Tabelleneingang und einen maskierten Tabellenausgang hat, wobei weiter der Tabelleneingang und der Tabellenausgang entweder mit der gleichen Basismaskierung maskiert sind oder mit unterschiedlichen Basismaskierungen maskiert sind.

Die hier angegebene getrennte Maskierung von Tabelleneingang und Tabellenausgang stellt eine Hintereinanderschaltung der zwei Maskierungen von Tabelleneingang und Tabellenausgang dar.

Im Folgenden wird die Erfindung an Hand von Ausführungsbeispielen und unter Bezugnahme auf die Zeichnung näher erläutert, in der zeigen:

Fig. 1 Korrelationskurven für DPA 2. Ordnung a) bei XOR-Maskierung b) bei erweiterter Maskierung gemäß der Erfindung;

Fig. 2 eine Teilberechnung bei AES, umfassend einen Tabellenzugriff, der für die erfindungsgemäße erweiterte Maskierung geeignet ist;

Fig. 3 Rechenvorschriften zur Basis-Maskierung eines Zwischenwerts zu einem maskierten Zwischenwert gemäß XOR-Maskierung, additiver Maskierung und affiner Maskierung;

Fig. 4 eine Tabelle in unmaskierter Form (Original-Tabelle);

Fig. 5    eine komplementierte Tabelle zur Tabelle aus Fig. 4, wobei nur der Tabelleneingang komplementiert (invertiert) ist;

Fig. 6    eine komplementierte Tabelle zur Tabelle aus Fig. 4, wobei nur der Tabellenausgang komplementiert ist;

Fig. 7    eine komplementierte Tabelle zur Tabelle aus Fig. 4, wobei der Tabelleneingang und der Tabellenausgang komplementiert sind;

Fig. 8    eine, ausgehend von der Tabelle aus Fig. 4, XOR-randomisierte Tabelle, mit Eingangsmaske 31 und Ausgangsmaske 00;

Fig. 9    eine, ausgehend von der Tabelle aus Fig. 4, XOR-randomisierte Tabelle, mit Eingangsmaske 00 und Ausgangsmaske 02;

Fig. 10   eine, ausgehend von der Tabelle aus Fig. 4, XOR-randomisierte Tabelle, mit Eingangsmaske 31 und Ausgangsmaske 02;

Fig. 11   eine, ausgehend von der Tabelle aus Fig. 10, gemäß der Erfindung einfach erweiterte XOR-randomisierte Tabelle, mit einer einzelnen Komplementär-Tabelle;

Fig. 12   eine, ausgehend von der Tabelle aus Fig. 10, gemäß der Erfindung zweifach erweiterte XOR-randomisierte Tabelle, mit drei Komplementär-Tabellen;

Fig. 13   eine, ausgehend von der Tabelle aus Fig. 4, additiv randomisierte Tabelle, mit Eingangsmaske 31 und Ausgangsmaske 00;

Fig. 14   eine, ausgehend von der Tabelle aus Fig. 4, additiv randomisierte Tabelle, mit Eingangsmaske 00 und Ausgangsmaske 02;

Fig. 15   eine, ausgehend von der Tabelle aus Fig. 4, additiv randomisierte Tabelle, mit Eingangsmaske 31 und Ausgangsmaske 02;

Fig. 16   eine, ausgehend von der Tabelle aus Fig. 15, gemäß der Erfindung einfach erweiterte additiv randomisierte Tabelle;

Fig. 17   eine, ausgehend von der Tabelle aus Fig. 15, gemäß der Erfindung zweifach erweiterte additiv randomisierte Tabelle;

Fig. 18   eine, ausgehend von der Tabelle aus Fig. 4, gemischt randomisierte Tabelle, mit additiver Eingangsmaske 31 und XOR-Ausgangsmaske 00;

Fig. 19   eine, ausgehend von der Tabelle aus Fig. 4, gemischt randomisierte Tabelle, mit additiver Eingangsmaske 00 und XOR-Ausgangsmaske 02;

Fig. 20   eine, ausgehend von der Tabelle aus Fig. 4, gemischt randomisierte Tabelle, mit additiver Eingangsmaske 31 und XOR-Ausgangsmaske 02;

Fig. 21   eine, ausgehend von der Tabelle aus Fig. 20, gemäß der Erfindung einfach erweiterte gemischt randomisierte Tabelle;

Fig. 22   eine, ausgehend von der Tabelle aus Fig. 20, gemäß der Erfindung zweifach erweiterte gemischt randomisierte Tabelle;

Fig. 23   eine Mulitplikations-Tabelle für 11 bezüglich Minimal-Polynom 103;

Fig. 24   eine zur Tabelle aus Fig. 23 invertierte Mulitplikations-Tabelle für 11 bezüglich Minimal-Polynom 103;

Fig. 25   eine affin randomisierte Tabelle mit Eingangsmaske 00 und Ausgangsmaske 00 und multiplikativer Maske 11 bezüglich Minimal-Polynom 103;

Fig. 26   eine affin randomisierte Tabelle mit Eingangsmaske 31 und Ausgangsmaske 00 und multiplikativer Maske 11 bezüglich Minimal-Polynom 103;

Fig. 27   eine affin randomisierte Tabelle mit Eingangsmaske 00 und Ausgangsmaske 02 und multiplikativer Maske 11 bezüglich Minimal-Polynom 103;

Fig. 28   eine affin randomisierte Tabelle mit Eingangsmaske 31 und Ausgangsmaske 02 und multiplikativer Maske 11 bezüglich Minimal-Polynom 103;

Fig. 29   eine, ausgehend von der Tabelle aus Fig. 28, einfach erweiterte Tabelle, mit einer einzigen Komplementär-Tabelle;

Fig. 30   eine, ausgehend von der Tabelle aus Fig. 28, zweifach erweiterte Tabelle, mit drei Komplementär-Tabellen.

Fig. 1 zeigt Korrelationskurven für einen DPA-Angriff zweiter Ordnung auf einen Tabellenzugriff beim AES a) bei XOR-Maskierung und b) bei erweiterter Maskierung gemäß Ausführungsformen der Erfindung. Als Tabelle ist eine AES S-Box vorgesehen. Die Korrelationskurve aus Fig. 1a wurde mit einem DPA-Angriff zweiter Ordnung auf einen Tabellenzugriff im AES bei Durchführung des Tabellenzugriffs mit dem richtigen Schlüssel ermittelt. Die Tabelle ist XOR-maskiert. Der signifikante Peak zeigt an, dass der richtige Schlüssel k verwendet wurde. Wurde der Tabellezugriff mit einem falschen Schlüssel k durchgeführt, fehlt der Peak, ähnlich wie in Fig. 1b. Fig. 1b zeigt eine Korrelationskurve, die aus einem DPA-Angriff zweiter Ordnung auf denselben Tabellenzugriff im Ablauf des AES gewonnen wurde wie die Kurve aus Fig. 1a. Im Unterschied zu Fig. 1a ist bei Fig. 1b die Tabelle, zusätzlich zur Basis-XOR-Maskierung, mit der erfindungsgemäßen Sekundärmaskierung maskiert. Die Sekundärmaskierung ist verwirklicht, indem die XOR-maskierte Tabelle, die Fig. 1a zu Grunde liegt, zu einer einfach erweiterten Tabelle erweitert ist, welche die XOR-maskierte Tabelle und die Komplementär-Tabelle zur XOR-maskierten Tabelle umfasst. Der Tabellenzugriff wird auf die erweiterte Tabelle durchgeführt. Dabei wird innerhalb der erweiterten Tabelle zufallsgesteuert entweder auf die XOR-maskierte Tabelle oder auf die Komplementär-Tabelle zugegriffen. Bei Durchführung des Tabellenzugriffs auf die erweiterte Tabelle mit dem richtigen Schlüssel fehlt in der Korrelation aus Fig. 1b im Vergleich zur Korrelation der nur basismaskierten Tabelle nach Fig. 1a der prominente Peak, der das Vorliegen des richtigen Schlüssels anzeigt. Somit sind mit der einfach erweiterten Tabelle statt einer lediglich XOR-maskierten Tabelle Tabellenzugriffe mit dem richtigen Schlüssel ununterscheidbar von Tabellenzugriffen mit falschen Schlüsseln.

Tabellenzugriffe auf eine zweifach erweiterte Tabelle, welche die Basis-maskierte Tabelle und drei Komplementär-Tabellen umfasst, liefern ähnliche Korrelationskurven wie die in Fig. 1b gezeigte. Auch bei zweifach erweiterter Tabelle sind also Tabellenzugriffe mit dem richtigen Schlüssel k ununterscheidbar von Tabellenzugriffen mit einem falschen Schlüssel. Bei den drei Komplementärtabellen sind ausgehend von der basismaskierten Tabelle nur der Tabelleneingang komplementiert, nur der Tabellenausgang komplementiert, bzw. der Tabelleneingang und der Tabellenausgang komplementiert.

DPA-Angriffe zweiter Ordnung auf lediglich affin maskierte Tabellenzugriffe im AES liefern ähnliche Korrelationskurven wie die in Fig. 1a gezeigte, mit einem prominenten Peak, falls der richtige Schlüssel k verwendet wurde, und einer gleichmäßigen Kurve ähnlich der in Fig. 1b gezeigten für falsche Schlüssel k. Korrelationskurven an erweitert maskierten Tabellen, denen eine affine Maskierung als Basisimaskierungen zu Grunde liegt, sind dagegen ununterscheidbar, unabhängig davon, ob der richtige oder ein falscher Schlüssel verwendet wurde.

Fig. 2 zeigt eine Teilberechnung aus einer AES-Verschlüsselung, bei der ein Tabellenzugriff auf eine Tabelle S (S-Box, AES Substitutionstabelle) durchgeführt wird. Der Tabellzugriff aus Fig. 2 ist dafür geeignet, mit dem erfindungsgemäßen Verfahren maskiert zu werden. In Fig. 2 sind zwei Tabellen S im AES dargestellt, die an unterschiedlichen Stellen im Algorithmus AES, hier genauer in unterschiedlichen Runden des AES, angewendet werden. Die beiden Tabellen S sind in Fig. 2 mit denselben Symbolen p, k, x, y für Klartext p, Schlüssel k, Eingangwert x der Tabelle S und Ausgangswert y der Tabelle S dargestellt, um anzudeuten, dass der Rechenvorgang auf Grund der Tabelle S für die beiden Tabellen S der gleiche ist. Die Werte von Klartext p, Schlüssel k, Eingangwert x und Ausgangswert y sind in der Regel für jede Tabelle S unterschiedlich.

Fig. 3 zeigt Rechenvorschriften zur Basis-Maskierung eines Zwischenwerts zu einem maskierten Zwischenwert mit XOR-Maskierung, additiver Maskierung und affiner Maskierung. Die Rechenvorschrift, um x mit einer XOR-Basismaskierung zu $x_{XOR}$ zu maskieren, lautet $x \rightarrow x_{XOR} = x \oplus r$. Die Rechenvorschrift, um x mit einer additiven Basismaskierung zu $x_{add}$ zu maskieren, lautet $x \rightarrow x_{add} = x + r \bmod 2^n$. Die Rechenvorschrift, um x mit einer affinen Basismaskierung zu $x_{\alpha}$ zu maskieren, lautet $x \rightarrow x_{\alpha} = \alpha \cdot x \oplus r$.

Fig. 4 zeigt eine Tabelle S in unmaskierter Form (Original-Tabelle), z.B. eine AES-S-Box. Die Tabelle ist im Vierersystem mit Basis 4 dargestellt. Folglich kann jedes Bit die vier Werte 0, 1, 2, 3 annehmen. Bei einem Tabellenzugriff beim AES gemäß Fig. 2, mit einer Tabelle gemäß Fig. 4, wird durch die Konkatenation von Spaltenindex und Zeilenindex der Tabelleneingang x=xx gebildet. Der an der durch Spaltenindex und Zeilenindex festgelegten Stelle in der Tabelle stehende Wert ist der Tabellenausgang y=yy. In Fig. 4 ist ein Beispiel eines Tabellenzugriffs mit Tabelleneingang xx = 12 und Tabellenausgang yy =11 eingezeichnet (Schnittbereich der beiden Ellipsen).

Fig. 5 zeigt eine komplementierte Tabelle $\overline{S}$ zur Tabelle S aus Fig. 4, wobei nur der Tabelleneingang x komplementiert ist. Der Tabelleneingang x ist dadurch komplementiert, dass die Positionen der Tabelleneinträge komplementiert sind. Beispielsweise ist der Eintrag zum Index x = xx =00 aus Fig. 4 in Fig. 5 an den Index $\overline{x}$ = 33 verschoben, der Eintrag zum Index x = 12 an den Index $\overline{x}$ = 21, etc.. Das Beispiel aus Fig. 4 wird mit der Maskierung aus Fig. 5 zu einem Tabellenzugriff mit Tabelleneingang xx = 21 und Tabellenausgang yy = 11 (Schnittbereich der beiden Ellipsen).

Fig. 6 zeigt eine komplementierte Tabelle $\overline{S}$ zur Tabelle S aus Fig. 4, wobei nur der Tabellenausgang y = yy komplementiert ist zu $\overline{y}$. Der Tabellenausgang y ist dadurch komplementiert, dass der Wert des Tabelleneintrags komplementiert ist. Beispielsweise ist der Tabellen-Ausgangs-Wert y = 11 am Index x =12 aus Fig. 4 in Fig. 6 zu einem Tabellen-Ausgangs-Wert $\overline{y}$ = 22 komplementiert, und verbleibt dabei an der gleichen Stelle. Der beispielhafte Tabellenzugriff ergibt mit der Maskierung aus Fig. 6 Tabelleneingang x = 12 und Tabellenausgang $\overline{y}$ = 22 (Kreis).

Fig. 7 zeigt eine komplementierte Tabelle $\overline{S}$ zur Tabelle S aus Fig. 4, wobei der Tabelleneingang x und der Tabellenausgang y komplementiert sind. Ausgehend von Fig. 5 ist z.B. der Tabelleneintrag, der in Fig. 5 vom Eingangswert x = 21 zum Ausgangswert y = 11 führt, zu einem Ausgangswert $\overline{y}$ = 22 komplementiert. Ausgehend von Fig. 6 ist der Ausgangswert $\overline{y}$ = 22 von Fig. 6 vom Index x = 12 zum Index $\overline{x}$ = 21 verschoben, d.h. zusätzlich ist der Eingangswert x komplementiert zu $\overline{x}$. Der Tabellenzugriff aus Fig. 4 wird in der Maskierung von Fig. 7 somit zum Tabellenzugriff mit Tabelleneingang $\overline{x}$ = 21 und Tabellenausgang $\overline{y}$ = 22 (Kreis).

Fig. 8-12 zeigen ausgehend von der Tabelle aus Fig. 4 randomisierte (= maskierte) Tabellen S', S", mit einer XOR-Maskierung als Basismaskierung. Jeder Eingangswert x der Tabellen in Fig. 8-12 ist somit gemäß der Rechenvorschrift $x \rightarrow x_{XOR} = x \oplus r$ maskiert zu $x_{XOR}$.

Fig. 8 zeigt eine XOR-randomisierte Tabelle S', mit Eingangsmaske 31 und Ausgangsmaske 00, d.h. nur der Tabelleneingang x ist maskiert, nämlich mit XOR-Maske 31, und der Tabellenausgang y ist unmaskiert (XOR-Maske 00, was äquivalent ist zu keiner Maskierung). Ausgehend von der Tabelle S aus Fig. 4 ergibt dies Eingang 23 und Ausgang 11 (Kreis).

Fig. 9 zeigt eine XOR-randomisierte Tabelle S', mit Eingangsmaske 00 und Ausgangsmaske 02, d.h. nur der Tabellenausgang ist maskiert, nämlich mit XOR-Maske 02, und der Tabelleneingang ist unmaskiert (XOR-Maske 00). Ausgehend von der Tabelle aus Fig. 4 gibt dies Eingang 12 und Ausgang 13.

Fig. 10 zeigt eine XOR-randomisierte Tabelle S', mit Eingangsmaske 31 und Ausgangsmaske 02. Fig. 10 zeigt eine mit XOR-Maskierung als Basismaskierung maskierte Tabelle, die als Grundlage zur Erzeugung einfach und zweifach (doppelt) erweitert maskierter Tabellen (Fig. 11, 12) dient. Ausgehend von der Tabelle aus Fig. 4 ergibt dies einen Tabellenzugriff mit Eingangswert $x_{XOR}$ = 23 und Ausgangswert $y_{XOR}$ = 13.

Fig. 11 zeigt eine erfindungsgemäß einfach erweiterte XOR-randomisierte (= XOR-maskierte) Tabelle S'' (einfach: Erweiterung nur in eine Richtung der Tabelle, hier nach rechts), mit Eingangsmaske 31 und Ausgangsmaske 02. In der erweiterten Tabelle sind die unkomplementierte XOR-Basis-maskierte Tabelle S' (= Tabelle aus Fig. 10) und eine Komplementär-Tabelle $\overline{S'}$ zur XOR-Basis-maskierten Tabelle enthalten. Die Komplementär-Tabelle $\overline{S'}$ ist dadurch gebildet, dass bei der Basis-maskierten Tabelle S' aus Fig. 10 der Tabelleneingang x nd der Tabellenausgang y komplementiert sind. Das zweite Bit (Spaltenindex) des Tabelleneingangs x ist um ein vorangestelltes Auswahlbit a (= Tabellen-Auswahlabschnitt) erweitert. Tabelleneingänge x haben somit in der Tabelle aus Fig. 11 die Form xax, Tabellenausgänge y unverändert die Form yy. Die Form xax ist beispielhaft angeführt und kann alternativ ebensogut axx oder xxa sein. Die Einträge zu den Spaltenindizes 00, 01,02, 03 (links), bei denen das Auswahlbit a im Tabelleneingangswert xax den Wert Null (0) hat, gehören zur unkomplementierten, nur mit der Basismaskierung maskierten Tabelle (Tabelle aus Fig. 10). Die Einträge zu den Spaltenindizes 10,11,12,13 (rechts, geschweifte Klammer, 1x), bei denen das Auswahlbit a im Tabelleneingangswert xax den Wert Eins (1) hat, gehören zur Komplementär-Tabelle. Der beispielhafte Tabellenzugriff aus Fig. 4 wird in der erweiterten Maskierung S'' aus Fig. 11 zu einem Tabellenzugriff mit Tabelleneingang xax = 203 und Tabellenausgang yy = 13 oder Tabelleneingang xax = 213 und Tabellenausgang yy = 31. Ob der Tabellenzugriff mit entweder Tabelleneingang $x_{XOR}$= xax = 203 und Tabellenausgang yy = 13 (linke Tabellenhälfte, Auswahlbit im Tabelleneingang 203 hat den Wert 0) oder Tabelleneingang $x_{XOR}$= xax = 213 und Tabellenausgang yy = 31 (rechte Tabellenhälfte, Auswahlbit im Tabelleneingang 213 hat den Wert 1) durchgeführt wird, ist dabei zufallsgesteuert.

Fig. 12 zeigt eine, ausgehend von der Tabelle S aus Fig. 4, gemäß der Erfindung zweifach erweiterte XOR-randomisierte Tabelle S'', mit Eingangsmaske 31 und Ausgangsmaske 02, mit drei Komplementär-Tabellen $\overline{S'}$. Anders gesagt zeigt Fig. 12 eine ausgehend von der Basis-maskierten Tabelle S' aus Fig. 10 um drei Komplementär-Tabellen $\overline{S'}$ zweifach erweiterte Tabelle (nach rechts erweitert und nach unten erweitert). Bei der zweifach erweiterten Tabelle S'' aus Fig. 12 sind beide Bits des Tabelleneingangs x (Zeilenindex und Spaltenindex) jeweils um ein vorangestelltes Bit erweitert. Tabelleneingänge x haben somit in der Tabelle aus Fig. 12 die Form axax, Tabellenausgänge y unverändert die Form yy. Die Form axax ist beispielhaft angeführt und kann alternativ ebensogut anders sein, z.B. aaxx, oder xxaa, oder axxa oder xaax. Tabelleneinträge im linken oberen Quadranten der zweifach erweiterten Tabelle aus Fig. 12, mit Indizes (Eingangswerten) 0x, bezeichnen die lediglich mit der Basismaskierung maskierte Tabelle (Tabelle aus Fig. 10). Tabelleneinträge mit Spaltenindex 1x (rechter oberer Quadrant) bezeichnen eine Tabelle, bei der ausgehend von der Basis-maskierten Tabelle (Fig. 10) der Tabelleneingang x maskiert ist (horizontale Klammer oben). Tabelleneinträge mit Zeilenindex 1x (linker unterer Quadrant) bezeichnen eine Tabelle, bei der ausgehend von der Basis-maskierten Tabelle (Fig. 10) der Tabellenausgang y maskiert ist (vertikale Klammer links). Somit ist im rechten oberen Quadranten der zweifach erweiterten Tabelle aus Fig. 12 eine ersten Komplementär-Tabelle angeordnet, bei der gegenüber der Tabelle aus Fig. 10 lediglich der Tabelleneingang x komplementiert ist. Im linken unteren Quadranten der zweifach erweiterten Tabelle aus Fig. 12 ist eine zweite Komplementär-Tabelle angeordnet, bei der gegenüber der Tabelle aus Fig. 10 lediglich der Tabellenausgang y komplementiert ist. Im rechten unteren Quadranten der zweifach erweiterten Tabelle aus Fig. 12 ist eine dritte Komplementär-Tabelle angeordnet, bei der gegenüber der Tabelle aus Fig. 10 sowohl der Tabelleneingang x als auch der Tabellenausgang y komplementiert sind. Der beispielhafte Tabellenzugriff aus Fig. 4 führt, je nach den Werten der Auswahlbits aa, auf zufallsgesteuert einen der in Fig. 12 eingekreisten Tabellenzugriffe, d.h.: entweder $x_{XOR}$ =axax=0203, yy=13; oder $\overline{x_{XOR}}^1$ = axax=0213, yy=02; oder $\overline{x_{XOR}}^2$ =axax=1203, yy=20; oder $\overline{x_{XOR}}^3$ =axax=1213, yy=31.

Der erfindungsgemäße Einsatz einer einfach und einer zweifach erweiterten Tabelle wird nachfolgend anhand von Fig. 2, 11 und 12 erläutert. In einem AES-Krypto-Coprozssor wird eine AES-Berechnung (wahlweise Verschlüsselung, Entschlüsselung, Signaturerzeugung oder Signaturprüfung) gestartet, in Fig. 2 beispielhaft eine Verschlüsselung. AES umfasst mehrere Runden R = 1,2,.... In jeder Runde R wird eine Teilberechnung durchgeführt, in der ein Klartextbyte p mit einem Schlüsselbyte k verxort ($p{\oplus}k$) wird, das Ergebnis der Verxorung in eine (Substitutions-) Tabelle S (S-Box) eingesetzt wird und hierdurch durch einen Tabellenzugriff auf die Tabelle S ein Zwischenwert x=S[$p{\oplus}k$] berechnet wird.

Gemäß einer Ausführungsform der Erfindung wird als Tabelle S in Fig. 2 eine gemäß Fig. 11 einfach erweiterte Tabelle S'' verwendet. Der Eingangswert x wird um ein Bit als Tabellenauswahl-Abschnitt a erweitert. Der Eingangswert x lautet somit x=$x_1ax_0$, in Fig. 11

beispielsweise $x$=203, falls auf die nicht-komplementierte Tabelle $\overline{S}$' zugegriffen wird, mit Ausgangswert y = 13 (wie in Fig. 10), und $x$ = 213, falls auf die komplementierte Tabelle $\overline{S}$' in $S$'' zugegriffen wird, mit Ausgangswert y = 31.

Gemäß einer anderen Ausführungsform der Erfindung wird als Tabelle S in Fig. 2 eine gemäß Fig. 12 zweifach erweiterte Tabelle $S$'' verwendet. Der Eingangswert x wird um zwei Bits erweitert. Der Eingangswert x lautet somit $x=a_1x_1a_0x_0$, in Fig. 11 beispielsweise $x = 0203$, falls auf die nicht-komplementierte Tabelle $S$' zugegriffen wird, mit Ausgangswert y = 13 (wie in Fig. 10), und $x$=1203, falls auf die komplementierte Tabelle $\overline{S}$' mit komplementiertem nur Ausgang zugegriffen wird, mit Ausgangswert y=20, etc..

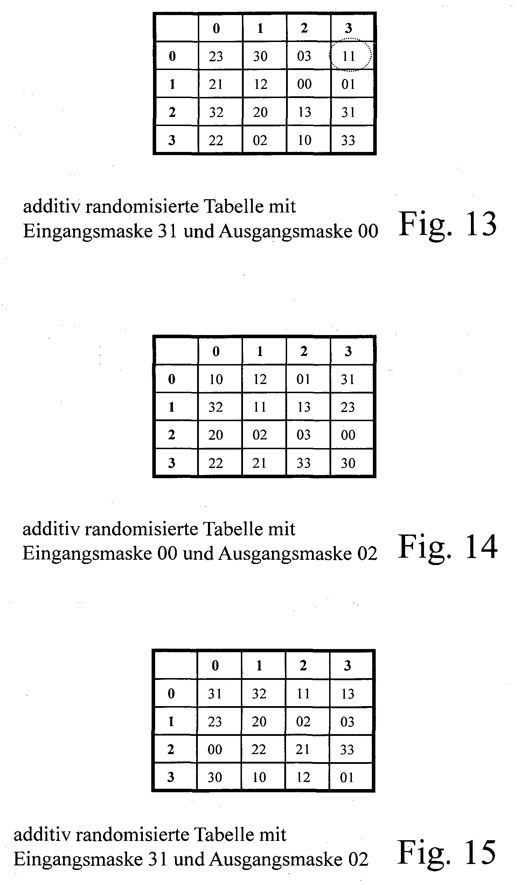

Fig. 13-17 zeigen randomisierte (maskierte) Tabellen, die ausgehend von der Original-Tabelle aus Fig. 4 durch additive Maskierung maskiert sind. Fig. 13-17 sind analog zu Fig. 8-12, nur mit anderer Basismaskierung.

Fig. 13 zeigt eine, ausgehend von der Tabelle $S$ aus Fig. 4, additiv randomisierte Tabelle $S$', mit Eingangsmaske 31 und Ausgangsmaske 00. Die Eingangsmaskierung führt den Eingangswert x = 12 aus Figur 4 in den maskierten Eingangswert x=03 über. Der Ausgangswert y = 11 bleibt unverändert (Maskierung des Ausgangs mit 00).

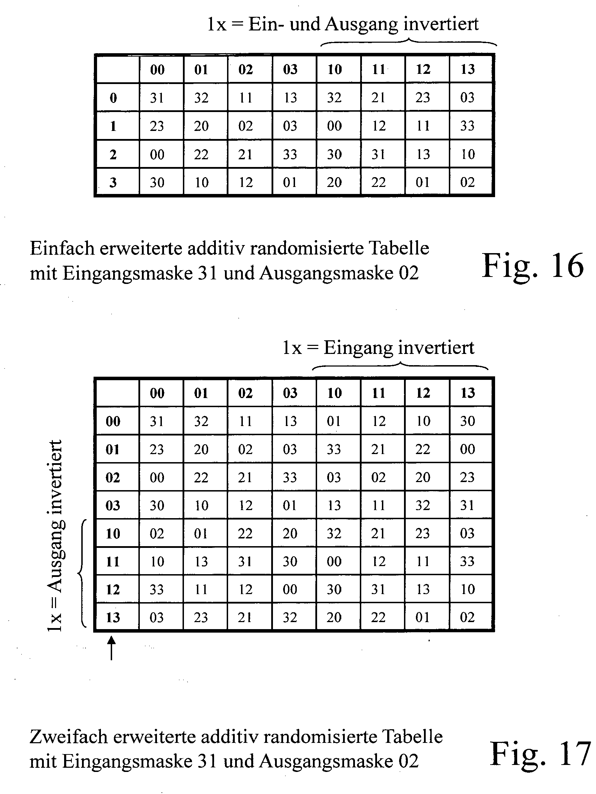

Fig. 14 zeigt eine, ausgehend von der Tabelle S aus Fig. 4, additiv randomisierte Tabelle $S$', mit Eingangsmaske 00 und Ausgangsmaske 02. Fig. 15 zeigt eine, ausgehend von der Tabelle $S$ aus Fig. 4, additiv randomisierte Tabelle $S$', mit Eingangsmaske 31 und Ausgangsmaske 02. Fig. 16 zeigt eine, ausgehend von der Tabelle S aus Fig. 4, gemäß der Erfindung einfach erweiterte additiv randomisierte Tabelle $S$'', mit Eingangsmaske 31 und Ausgangsmaske 02, mit der basismaskierten Tabelle $S$' und einer Komplementär-Tabelle $\overline{S}$'. Fig. 17 zeigt eine, ausgehend von der Tabelle $S$ aus Fig. 4, gemäß der Erfindung zweifach erweiterte additiv randomisierte Tabelle $S$'', mit Eingangsmaske 31 und Ausgangsmaske 02, mit der basis-maskierten Tabelle S' und drei Komplementär-Tabellen $\overline{S}$'.

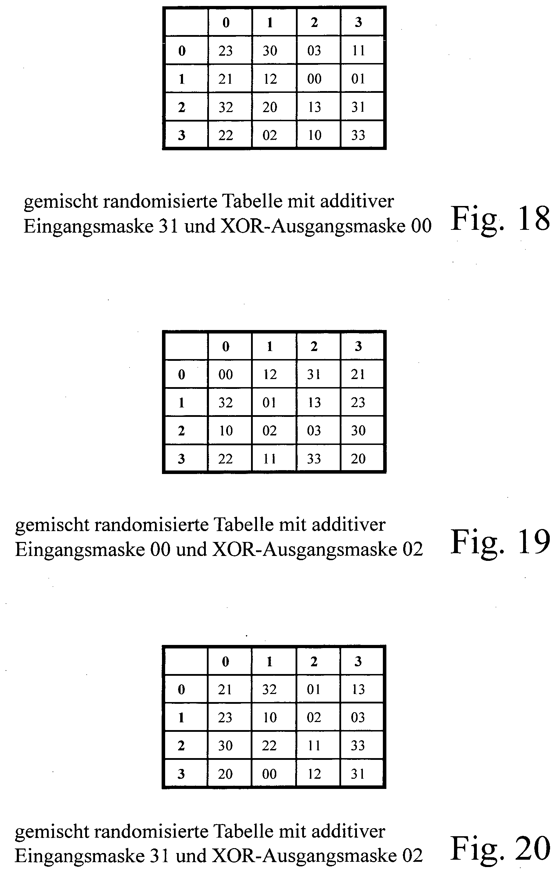

Fig. 18-22 zeigen ausgehend von der Original-Tabelle S aus Fig. 4 gemischt randomisierte (maskierte) Tabellen $\overline{S}$', mit additiver Eingangsmaske und XOR-Ausgangsmaske. Fig. 18-22 sind analog zu Fig. 8-12 und Fig. 13-17, nur mit anderer Basismaskierung.

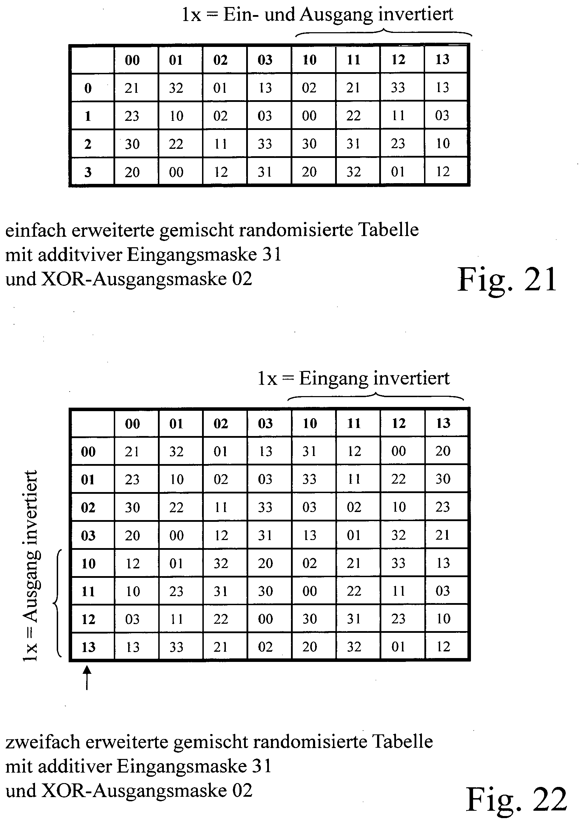

Fig. 18 zeigt eine, ausgehend von der Tabelle aus Fig. 4, gemischt randomisierte Tabelle $S$', mit additiver Eingangsmaske 31 und XOR-Ausgangsmaske 00. Fig. 19 zeigt eine, ausgehend von der Tabelle aus Fig. 4, gemischt randomisierte Tabelle $S$', mit additiver Eingangsmaske 00 und XOR-Ausgangsmaske 02. Fig. 20 zeigt eine, ausgehend von der Tabelle aus Fig. 4, gemischt randomisierte Tabelle $S$', mit additiver Eingangsmaske 31 und XOR-Ausgangsmaske 02. Fig. 21 zeigt eine, ausgehend von der Tabelle aus Fig. 4, gemäß der Erfindung einfach erweiterte gemischt randomisierte Tabelle $S$'', mit additiver Eingangsmaske 31 und XOR-Ausgangsmaske 02, mit der basis-maskierten Tabelle $S$' und einer Komplementär-Tabelle $\overline{S}$'. Fig. 22 zeigt eine, ausgehend von der Tabelle aus Fig. 4, gemäß der Erfindung zweifach erweiterte gemischt randomisierte Tabelle $S$'' mit additiver Eingangsmaske 31 und XOR-Ausgangsmaske 02, mit der Basis-maskierten Tabelle S' und drei Komplementär-Tabellen $\overline{S}$'.

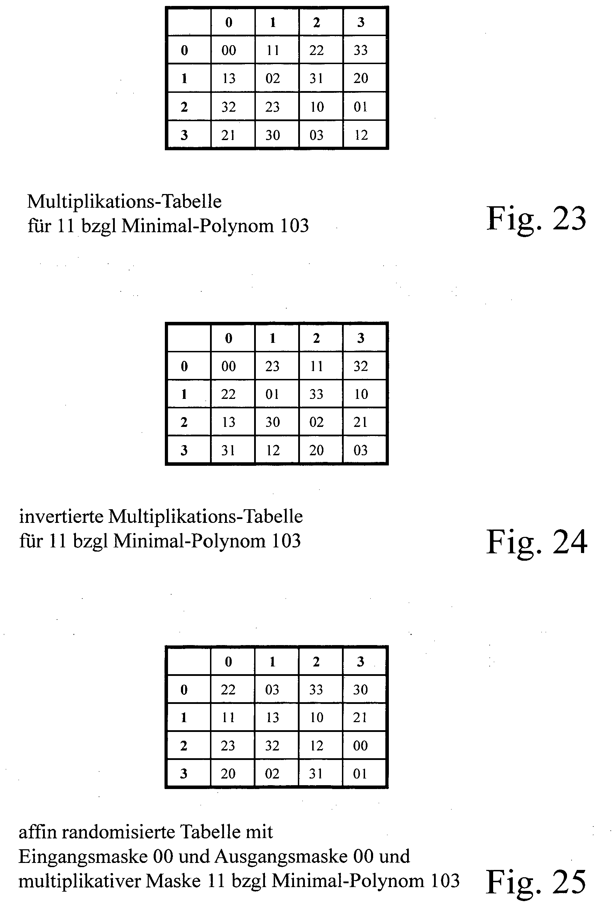

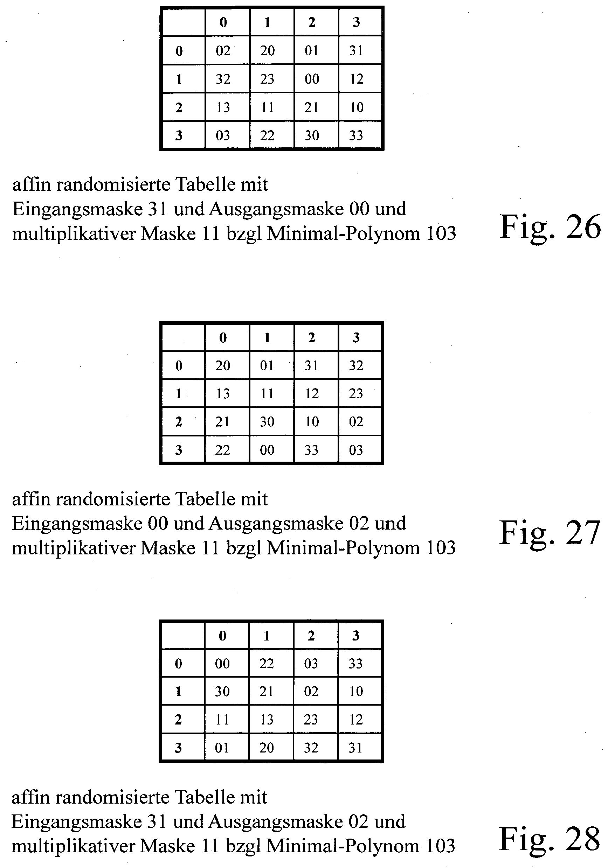

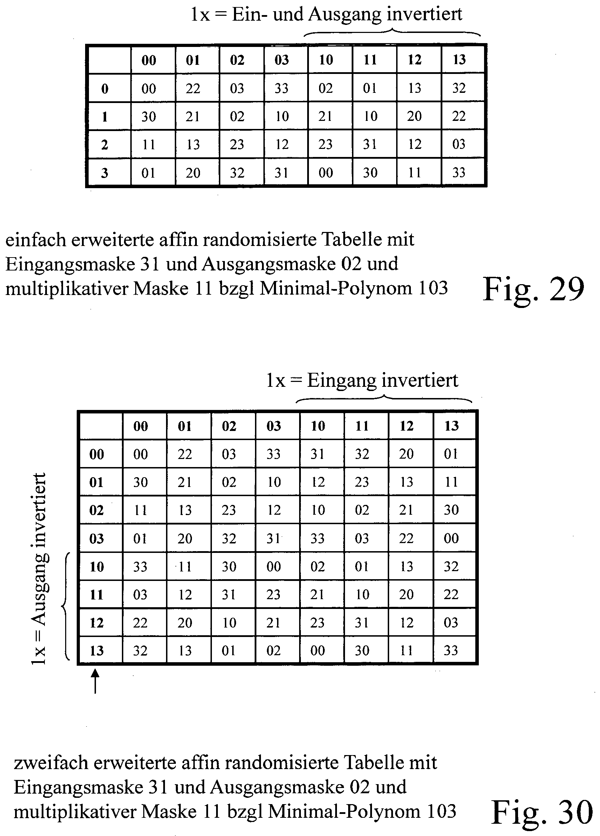

Fig. 23-30 veranschaulichen schrittweise die Erzeugung einer einfach erweiterten (Fig. 29) und einer zweifach erweiterten (Fig. 30) Tabelle $S$'', bei einer affinen Basismaskierung mit Eingangsmaske 31 und Ausgangsmaske 02 und multiplikativer Maske 11 bezüglich Minimal-Polynom 103 (Fig. 28).

Fig. 23 zeigt eine Mulitplikations-Tabelle für 11 bezüglich Minimal-Polynom 103. Fig. 24 zeigt eine invertierte Mulitplikations-Tabelle für 11 bezüglich Minimal-Polynom 103. Fig. 25 zeigt eine affin randomisierte (maskierte) Tabelle $S$' mit Eingangsmaske 00 und Ausgangsmaske 00 und multiplikativer Maske 11 bzgl Minimal-Polynom 103. Fig. 26 zeigt eine affin randomisierte Tabelle $S$' mit Eingangsmaske 31 und Ausgangsmaske 00 und multiplikativer Maske 11 bzgl Minimal-Polynom 103. Fig. 27 zeigt eine affin randomisierte Tabelle $S$' mit Eingangsmaske 00 und Ausgangsmaske 02 und multiplikativer Maske 11 bzgl Minimal-Polynom 103. Fig. 28 zeigt eine affin randomisierte Tabelle $S$' mit Eingangsmaske 31 und Ausgangsmaske 02 und multiplikativer Maske 11 bzgl Minimal-Polynom 103.

Fig. 29 zeigt eine, ausgehend von der Tabelle $S$' aus Fig. 28, einfach erweiterte Tabelle $S$'', d.h. insgesamt eine einfach erweiterte affin randomisierte Tabelle $S$'' mit Eingangsmaske 31 und Ausgangsmaske 02 und multiplikativer Maske 11 bzgl Minimal-Polynom 103.

Fig. 30 zeigt eine, ausgehend von der Tabelle S' aus Fig. 28, zweifach erweiterte Tabelle $S$'', d.h. insgesamt eine zweifach erweiterte affin randomisierte Tabelle $S$'' mit Eingangsmaske 31 und Ausgangsmaske 02 und multiplikativer Maske 11 bzgl Minimal-Polynom 103.

<u>Zitierter Stand der Technik:</u>

1) DE 198 22 217 A1;
2) WO 01/31422 A2;
3) EP 2 302 552 A1;
4) [SP06] K. Schramm, C. Paar: Higher Order Masking of the AES. In: Pointcheval, D. (ed.), CT-RSA 2006, Springer, Lecture Notes in Computer Science LNCS 3860, 2006, pp. 208-225;
5) [RDP08] Matthieu Rivain, Emmanuelle Dottax, Emmanuel Prouff: Block Ciphers Implementations Provably Secure Against Second Order Side Channel Analysis, In: Kaisa Nyberg (ed.), Fast Software Encryption-FSE 2008, Springer, Lecture Notes in Computer Science LNCS 5086, 2008, pp. 127-143;

6) [PRB10] E. Prouff, M. Rivain, R. Bevan: Statistical Analysis of Second Order Differential Power Analysis, http://eprint.iacr.org/2010/646.pdf, IEEE Transactions on Computers 58, S. 799.811, 2009;

7) [GPQ11] L. Genelle, E. Prouff, M. Quisquater: Thwarting High-Order Side Channel Analysis with Additive and Multiplicative Maskings, http://eprint.iacr.org/2011/425.pdf, Cryptographic Hardware and Embedded Systems - CHES 2011, Lecture Notes in Computer Science 6917, S. 240-255, Springer, 2011;

8) [KHL11] H. Kim, S. Hong, J. Lim: A Fast and Provable Secure Higher Order Masking of AES S-Box, Cryptographic Hardware and Embedded Systems - CHES 2011, Lecture Notes in Computer Science 6917, S. 95-107, Springer, 2011.

**Patentansprüche**

1. Verfahren, in einem Prozessor, zum Durchführen einer kryptographischen Berechnung (AES), bei der aus Eingangsdaten (P) unter Verwendung eines kryptographischen Schlüssels (K) und über die Erzeugung von Zwischenwerten (x, y) Ausgangsdaten (C) erzeugt werden, wobei bei der Durchführung der Berechnung (AES) eine Basismaskierung (XOR; $\alpha$) angewandt wird, durch welche zumindest manche Zwischenwerte (x, y, ...) als maskierte Zwischenwerte ($x_{XOR}$, $y_{XOR}$,...;$x_\alpha$,$y_\alpha$..) in die Berechnung einfließen, **dadurch gekennzeichnet, dass** bei der Durchführung der Berechnung (AES) zusätzlich eine Sekundärmaskierung (00/FF) angewandt wird, wobei für jeden mittels der Basismaskierung (XOR; $\alpha$) maskierten Zwischenwert ($x_{XOR}$; $x_\alpha$) das Einerkomplement ($\overline{x}_{XOR}$;$\overline{x}_\alpha$) des maskierten Zwischenwerts ($x_{XOR}$;$x_\alpha$) gebildet wird, der maskierte Zwischenwert ($x_{XOR}$;$x_\alpha$ und das Einerkomplement ($\overline{x}_{XOR}$;$\overline{x}_\alpha$) des maskierten Zwischenwerts ($x_{XOR}$;$x_\alpha$) bereitgestellt werden und zufallsgesteuert die Berechnung (AES) entweder mit dem maskierten Zwischenwert ($x_{XOR}$;$x_\alpha$) oder mit dem Einerkomplement ($\overline{x}_{XOR}$;$\overline{x}_\alpha$) des maskierten Zwischenwerts ($x_{XOR}$;$x_\alpha$) durchgeführt wird.

2. Verfahren nach Anspruch 1, wobei als Basismaskierung eine einfache oder mehrfache XOR-Maskierung, oder eine affine Maskierung ($\alpha$), oder eine Zerlegungsmaskierung, oder eine Hintereinanderschaltung zweier oder mehrerer der vorgenannten Basismaskierungen vorgesehen ist.

3. Verfahren nach Anspruch 1 oder 2, wobei die Berechnung (AES) eine Teilberechnung umfasst, durch die aus einem Eingangswert ($x=p\oplus k$) unter Durchführung eines Tabellenzugriffs auf eine Tabelle (S), die eine Mehrzahl von Tabelleneinträgen (y) aufweist, ein Zwischenwert (y=S[x]) erzeugbar ist, wobei zur Durchführung der Berechnung oder zumindest der Teilberechnung

   - die Tabelle (S) mit der Basismaskierung (XOR; $\alpha$) maskiert wird zu einer maskierten Tabelle (S'), und
   - die maskierte Tabelle (S') mit der Sekundärmaskierung (00/FF) maskiert wird, wobei

      - die maskierte Tabelle (S') komplementiert wird, so dass mindestens eine maskierte Komplementär-Tabelle ($\overline{S}$') berechnet wird,
      - die maskierte Tabelle (S') und die mindestens eine maskierte Komplementär-Tabelle ($\overline{S}$') bereitgestellt werden und
      - die Teilberechnung dadurch durchgeführt wird, dass der Tabellenzugriff zufallsgesteuert auf entweder die maskierte Tabelle (S') oder die bzw. eine maskierte Komplementär-Tabelle (S') durchgeführt wird.

4. Verfahren nach Anspruch 3, wobei das zufallsgesteuerte Zugreifen auf entweder die maskierte Tabelle (S') oder die bzw. eine maskierte Komplementär-Tabelle ($\overline{S}$') dadurch durchgeführt wird, dass der Eingangswert (x) zur Erzeugung des Zwischenwerts (y=S[x]) um einen Tabellenauswahl-Abschnitt (a; $a_1..a_0$) erweitert wird, durch den die Tabelle festgelegt ist, auf die zugegriffen wird.

5. Verfahren nach Anspruch 3 oder 4, wobei die Tabelle (S) einen Tabelleneingang (x) aufweist und einen Tabellenausgang (y) aufweist, und wobei genau eine maskierte Komplementär-Tabelle ($\overline{S}$') berechnet wird, bei welcher sowohl der Tabelleneingang (x) als auch der Tabellenausgang (y) komplementiert sind, indem die Positionen der Tabelleneinträge in der Tabelle (S) komplementiert sind und die Werte der Tabelleneinträge in der Tabelle (S) komplementiert sind.

6. Verfahren nach Anspruch 3 oder 4, wobei die Tabelle (S) einen Tabelleneingang (x) aufweist und einen Tabellenausgang (y) aufweist, und wobei drei maskierte Komplementär-Tabellen ($\overline{S}$') berechnet werden, wobei

      - bei einer ersten maskierten Komplementär-Tabelle ($\overline{S}$) nur der Tabelleneingang (x) komplementiert ist, indem die Positionen der Tabelleneinträge in der maskierten Tabelle (S') komplementiert sind,
      - bei einer zweiten maskierten Komplementär-Tabelle ($\overline{S}$') nur der Tabellenausgang (y) komplementiert ist, indem die Werte der Tabelleneinträge in der maskierten Tabelle (*S'*) komplementiert sind, und

- bei einer dritten maskierten Komplementär-Tabelle ($\overline{S}$') sowohl der Tabelleneingang (x) als auch der Tabellenausgang (y) komplementiert sind, indem die Positionen der Tabelleneinträge in der maskierten Tabelle (*S'*) komplementiert sind und die Werte der Tabelleneinträge in der Tabelle (*S*) komplementiert sind.

**7.** Verfahren nach einem der Ansprüche 3 bis 6, wobei die maskierte Tabelle (*S'*) und die mindestens eine Komplementär-Tabelle (*S'*) in eine einzige erweiterteTabelle (*S"*) eingetragen werden, die die Tabelleneinträge der maskierten Tabelle (*S'*) und der mindestens einen Komplementär-Tabelle ($\overline{S}$') in einer vorbestimmten Anordnung (hintereinander; schachbrettartig abwechselnd; ...) enthält.

**8.** Verfahren nach einem der Ansprüche 3 bis 7, wobei dem Prozessor ein Permanentspeicher (ROM) und ein flüchtiger Arbeitsspeicher (RAM) zugeordnet sind, und wobei die Tabelle (*S*) im Permanentspeicher (ROM) abgespeichert ist, und die maskierte Tabelle (*S'*) und die mindestens eine maskierte Komplementär-Tabelle ($\overline{S}$') im flüchtigen Arbeitsspeicher (RAM) berechnet werden.

**9.** Verfahren nach einem der Ansprüche 3 bis 8, wobei

- die maskierte Tabelle (*S'*) und mindestens eine Komplementär-Tabelle ($\overline{S}$') für eine Mehrzahl von Tabellenzugriffen auf die Tabelle (*S*) verwendet werden, wahlweise für zumindest eine gesamte Durchführung der kryptographischen Berechnung (AES), und
- innerhalb der Mehrzahl von Tabellenzugriffen zumindest einmal, vorzugsweise für jeden Tabellenzugriff, neu zufallsgesteuert festgelegt wird, dass die Berechnung (AES) entweder mit dem maskierten Zwischenwert ($x_{XOR}$;$x_\alpha$) oder mit dem Einerkomplement($\overline{x}_{XOR}$;$\overline{x}_\alpha$) des maskierten Zwischenwerts ($x_{XOR}$;$x_\alpha$) durchgeführt wird, und die Berechnung entsprechend dem Festlegen durchgeführt wird.

**10.** Verfahren nach einem der Ansprüche 3 bis 9, wobei die Tabelle (*S*) einen Tabelleneingang (x) aufweist und einen Tabellenausgang (y) aufweist, und wobei die maskierte Tabelle (*S'*)

- entweder einen maskierten Tabelleneingang (x) hat,
- oder einen maskierten Tabellenausgang (y) hat,
- oder einen maskierten Tabelleneingang (x) und einen maskierten Tabellenausgang (*y*) hat, wobei weiter der Tabelleneingang (x) und der Tabellenausgang (y) entweder mit der gleichen Basismaskierung (XOR; $\alpha$) maskiert sind oder mit unterschiedlichen Basismaskierungen (XOR; $\alpha$) maskiert sind.

**Claims**

**1.** A method, in a processor, for executing a cryptographic computation (AES) wherein output data (C) are generated from input data (P) employing a cryptographic key (K) and via the generation of intermediate values (x, y),

wherein upon the execution of the computation (AES) a base masking (XOR; $\alpha$) is applied through which at least some intermediate values (x, y, ...) are incorporated into the computation as masked intermediate values ($x_{XOR}$, $y_{XOR}$, ...; $x_\alpha$, $y_\alpha$ ....),

**characterized in that**

a secondary masking (00/FF) is additionally applied upon the execution of the computation (AES), wherein for each intermediate value ($x_{XOR}$; $x_\alpha$) masked by means of the base masking (XOR; $\alpha$) the one's complement ($\overline{x}_{XOR}$; $\overline{x}_\alpha$) of the masked intermediate value ($x_{XOR}$; $x_\alpha$) is formed, the masked intermediate value ($x_{XOR}$; $x_\alpha$) and the one's complement ($\overline{x}_{XOR}$; $\overline{x}_\alpha$) of the masked intermediate value ($x_{XOR}$; $x_\alpha$) are made available, and randomly the computation is executed either with the masked intermediate value ($x_{XOR}$; $x_\alpha$) or with the one's complement ($\overline{x}_{XOR}$; $\overline{x}_\alpha$) of the masked intermediate value ($\overline{x}_{XOR}$; $x_\alpha$).

**2.** The method according to claim 1, wherein there is provided as a base masking a simple or multiple XOR masking, or an affine masking ($\alpha$), or a decomposition masking, or a chaining of two or more of the above-mentioned base maskings.

**3.** The method according to claim 1 or 2, wherein the computation (AES) comprises a sub-computation through which an intermediate value (*y* = *S*[*x*]) is generatable from an input value (*x* = *p*⊕*k*) while executing a table access to a table (*S*) having a plurality of table entries (y), wherein for executing the computation or at least the sub-computation

- the table (*S*) is masked with the base masking (XOR; $\alpha$) to a masked table (*S'*), and
- the masked table (*S'*) is masked with the secondary masking (00/FF), wherein

- the masked table (*S'*) is complemented, so that at least one masked complementary table ($\overline{S}$') is computed,

- the masked table ($S'$) and the at least one masked complementary table ($\overline{S}'$) are made available, and
- the sub-computation is executed by executing the table access randomly on either the masked table ($S'$) or the, or a, masked complementary table ($\overline{S}'$).

4. The method according to claim 3, wherein the randomized accessing of either the masked table ($S'$) or the, or a, masked complementary table ($\overline{S}'$) is executed by extending the input value (x), for generating the intermediate value ($y = S[x]$), by a table selection portion (a; $a_1...a_0$) through which the table that is accessed is specified.

5. The method according to claim 3 or 4, wherein the table ($S$) has a table input (x) and has a table output (y), and wherein exactly one masked complementary table ($\overline{S}'$) is computed in which both the table input (x) and the table output (y) are complemented by the positions of the table entries in the table ($S$) being complemented and the values of the table entries in the table ($S$) being complemented.

6. The method according to claim 3 or 4, wherein the table ($S$) has a table input (x) and has a table output (y), and wherein three masked complementary tables ($\overline{S}'$) are computed, wherein

- in a first masked complementary table ($\overline{S}'$) only the table input (x) is complemented by the positions of the table entries in the masked table ($S'$) being complemented,
- in a second masked complementary table ($\overline{S}'$) only the table output (y) is complemented by the values of the table entries in the masked table ($S'$) being complemented, and
- in a third masked complementary table ($S'$) both the table input (x) and the table output (y) are complemented by the positions of the table entries in the masked table ($S'$) being complemented and the values of the table entries in the table ($S$) being complemented.

7. The method according to any of claims 3 to 6, wherein the masked table ($S'$) and the at least one complementary table ($\overline{S}'$) are entered into a single extended table ($S''$) which contains the table entries of the masked table ($S'$) and the at least one complementary table ($\overline{S}'$) in a predetermined arrangement (one after the other; alternating like a checkerboard; ...).

8. The method according to any of claims 3 to 7, wherein the processor has associated therewith a permanent memory (ROM) and a volatile working memory (RAM), and wherein the table ($S$) is stored in the permanent memory (ROM), and the masked table ($\overline{S}'$) and the at least one masked complementary table ($\overline{S}'$) are computed in the volatile working memory (RAM).

9. The method according to any of claims 3 to 8, wherein

- the masked table ($S'$) and at least one complementary table ($\overline{S}'$) are employed for a plurality of table accesses to the table ($S$), electively for at least one total execution of the cryptographic computation (AES), and
- within the plurality of table accesses it is newly randomly specified at least once, preferably for each table access, that the computation (AES) is executed either with the masked intermediate value ($x_{XOR}$; $x_\alpha$) or with the one's complement ($\overline{x}_{XOR}$; $\overline{x}_\alpha$) of the masked intermediate value ($x_{XOR}$; $x_\alpha$), and the computation is executed in accordance with said specifying.

10. The method according to any of claims 3 to 9, wherein the table ($S$) has a table input (x) and has a table output (y), and wherein the masked table ($\overline{S}'$)

- either has a masked table input (x),
- or has a masked table output (y),
- or has a masked table input (x) and a masked table output (y), wherein the table input (x) and the table output (y) further either are masked with the same base masking (XOR; $\alpha$) or are masked with different base maskings (XOR; $\alpha$).

**Revendications**

1. Procédé, dans un processeur, d'exécution d'un calcul cryptographique (AES) dans lequel, à partir de données de saisie (P), en ayant recours à une clé cryptographique (K) et par l'intermédiaire de la génération de valeurs intermédiaires (x, y), des données de sortie (C) sont générées, cependant que, lors de l'exécution du calcul (AES), un masquage de base (XOR; $\alpha$) est utilisé, par lequel au moins certaines valeurs intermédiaires (x, y, ...) sont, en tant que valeurs intermédiaires masquées ($x_{XOR}$, $y_{XOR}$,...;$x_\alpha$, $y_\alpha$, ...), inclues dans le calcul, **caractérisé en ce que** lors de l'exécution d'un calcul (AES), en outre un masquage secondaire (00/FF) est utilisé, cependant que, pour chaque valeur intermédiaire ($x_{XOR}$; $x_\alpha$) masquée au moyen du masquage de base (XOR; $\alpha$), le complément à un ($\overline{x}_{XOR}$; $\overline{x}_\alpha$) de la valeur inter-

médiaire ($x_{XOR}$; $x_\alpha$) masquée est constitué, la valeur intermédiaire ($x_{XOR}$; $x_\alpha$) masquée et le complément à un ($\overline{x}_{XOR}$; $\overline{x}_\alpha$) de la valeur intermédiaire ($x_{XOR}$; $x_\alpha$) masquée sont mis à disposition, et, de manière commandée aléatoirement, le calcul (AES) est exécuté soit avec la valeur intermédiaire ($x_{XOR}$; $x_\alpha$) masquée, soit avec le complément à un ($\overline{x}_{XOR}$; $\overline{x}_\alpha$) de la valeur intermédiaire ($x_{XOR}$; $x_\alpha$) masquée.

2. Procédé selon la revendication 1, cependant que, en tant que masquage de base, un masquage XOR simple ou multiple, ou un masquage ($\alpha$) affin, ou un masquage par décomposition, ou un emploi les uns derrière les autres de deux ou de plusieurs des masquages de base précités est prévu.

3. Procédé selon la revendication 1 ou 2, cependant que le calcul (AES) comprend un calcul partiel par lequel, à partir d'une valeur de saisie ($x=p\oplus k$), en exécutant un accès à table à une table ($S$) qui comporte une pluralité de saisies de table (y), une valeur intermédiaire ($y=S$[x]) masquée peut être générée, cependant que, pour l'exécution du calcul ou au moins du calcul partiel,

   - la table ($S$) est masquée avec le masquage de base (XOR; $\alpha$) de manière à devenir une table ($S'$) masquée, et
   - la table ($S'$) masquée est masquée avec le masquage secondaire (00/FF), cependant que

      - la table ($S'$) masquée est complémentée, de telle sorte qu'au moins une table complémentaire ($\overline{S}'$) masquée est calculée,
      - la table ($S'$) masquée et la au moins une table complémentaire ($\overline{S}'$) masquée sont mises à disposition,

   - le calcul partiel est exécuté en ce que l'accès à table est exécuté de manière commandée aléatoirement soit à la table ($S'$) masquée, soit à la ou à une table complémentaire ($\overline{S}'$) masquée.

4. Procédé selon la revendication 3, cependant que l'accès commandé aléatoirement soit à la table ($S'$) masquée, soit à la ou à une table complémentaire ($\overline{S}'$) masquée est exécuté en ce que la valeur de saisie (x) est, pour la génération de la valeur intermédiaire ($y=S$[x]), élargie d'une section de sélection de table (a; $a_1$ ...$a_0$) par laquelle la table à laquelle il est accédé est déterminée.

5. Procédé selon la revendication 3 ou 4, cependant que la table ($S$) comporte une entrée de table (x) et comporte une sortie de table (y), et cependant qu'exactement une table complémentaire ($\overline{S}'$) masquée est calculée, dans laquelle tant l'entrée de table (x) que la sortie de table (y) sont complémentées, ce qui a lieu en ce que les positions des enregistrements de table dans la table ($S$) sont complémentées et les valeurs des enregistrements de table dans la table ($S$) sont complémentées.

6. Procédé selon la revendication 3 ou 4, cependant que la table ($S$) comporte une entrée de table (x) et comporte une sortie de table (y), et cependant que trois tables complémentaires ($\overline{S}'$) masquées sont calculées, cependant que

   - dans une première table complémentaire ($\overline{S}'$) masquée, uniquement l'entrée de table (x) est complémentée, ce qui a lieu en ce que les positions des enregistrements de table dans la table ($S'$) masquée sont complémentées,
   - dans une deuxième table complémentaire ($\overline{S}'$) masquée, uniquement la sortie de table (y) est complémentée, ce qui a lieu en ce que les valeurs des enregistrements de table dans la table ($S$) masquée sont complémentées, et
   - dans une troisième table complémentaire ($\overline{S}'$) masquée, tant l'entrée de table (x) que la sortie de table (y) sont complémentées, ce qui a lieu en ce que les positions des enregistrements de table dans la table ($S'$) masquée sont complémentées et les valeurs des enregistrements de table dans la table ($S$) sont complémentées.

7. Procédé selon une des revendications de 3 à 6, cependant que la table ($S'$) masquée et la au moins une table complémentaire ($\overline{S}'$) sont enregistrées dans une table ($S''$) élargie unique qui contient les enregistrements de table de la table ($S'$) masquée et de la au moins une table complémentaire ($\overline{S}'$) dans un agencement prédéterminé (les uns derrière les autres ; alternativement en damier ; ...).

8. Procédé selon une des revendications de 3 à 7, cependant que, au processeur, une mémoire rémanente (ROM) et une mémoire volatile de travail (RAM) sont affectées, et cependant que la table ($S$) est mémorisée dans la mémoire rémanente (ROM) et que la table ($S'$) masquée et la au moins une table complémentaire ($\overline{S}'$) masquée sont calculées dans la mémoire volatile de travail (RAM).

9. Procédé selon une des revendications de 3 à 8, cependant que

   - la table ($S'$) masquée et la au moins une table complémentaire ($\overline{S}'$) sont utilisées pour une pluralité d'accès à table à la table (S), au choix pour au moins une exécution entière du calcul cryptographique (AES), et

- à l'intérieur de la pluralité de saisies de table, au moins une fois, de préférence pour chaque accès à table, il est à nouveau déterminé, de manière commandée aléatoirement, que le calcul (AES) est exécuté soit avec la valeur intermédiaire ($x_{XOR}$; $x_{\alpha}$) masquée, soit avec le complément à un ($\overline{x}_{XOR}$; $\overline{x}_{\alpha}$) de la valeur intermédiaire ($x_{XOR}$; $x_{\alpha}$) masquée, et le calcul est exécuté conformément à la détermination.

10. Procédé selon une des revendications de 3 à 9, cependant que la table (*S*) comporte une entrée de table (x) et comporte une sortie de table (y), et cependant que la table (*S'*) masquée a

- soit une entrée masquée de table (x),
- soit une sortie masquée de table (y),
- soit une entrée masquée de table (x) et une sortie masquée de table (y), cependant que, en outre, l'entrée de table (x) et la sortie de table (y) sont masquées soit avec le même masquage de base (XOR; $\alpha$), soit avec des masquages de base (XOR; $\alpha$) différents.

a) XOR           b) erweitert

**Fig. 1**

**Fig. 2**

a) $XOR-Maskierung:$     $x \rightarrow x_{XOR} = x \oplus r$

b) $additive\ Maskierung:$    $x \rightarrow x_{add} = x + r \bmod 2^{n}$

c) $affine\ Maskierung:$      $x \rightarrow x_{\alpha} = \alpha \cdot x \oplus r$

**Fig. 3**

Eingang: 12
Ausgang: 11

|   | 0 | 1 | 2 | 3 |
|---|---|---|---|---|
| 0 | 02 | 10 | 33 | 23 |
| 1 | 30 | 03 | 11 | 21 |
| 2 | 12 | 00 | 01 | 32 |
| 3 | 20 | 13 | 31 | 22 |

Original-Tabelle (Vierersystem mit Basis 4)  **Fig. 4**

|   | 0 | 1 | 2 | 3 |
|---|---|---|---|---|
| 0 | 22 | 31 | 13 | 20 |
| 1 | 32 | 01 | 00 | 12 |
| 2 | 21 | 11 | 03 | 30 |
| 3 | 23 | 33 | 10 | 02 |

Tabelle mit komplementiertem Eingang  **Fig. 5**

|   | 0 | 1 | 2 | 3 |
|---|---|---|---|---|
| 0 | 31 | 23 | 00 | 10 |
| 1 | 03 | 30 | 22 | 12 |
| 2 | 21 | 33 | 32 | 01 |
| 3 | 13 | 20 | 02 | 11 |

Tabelle mit komplementiertem Ausgang  **Fig. 6**

|   | 0 | 1 | 2 | 3 |
|---|---|---|---|---|
| 0 | 11 | 02 | 20 | 13 |
| 1 | 01 | 32 | 33 | 21 |
| 2 | 12 | 22 | 30 | 03 |
| 3 | 10 | 00 | 23 | 31 |

Tabelle mit komplementiertem
Ein- und Ausgang  **Fig. 7**

|   | 0 | 1 | 2 | 3 |
|---|---|---|---|---|
| 0 | 13 | 20 | 22 | 31 |
| 1 | 00 | 12 | 32 | 01 |
| 2 | 03 | 30 | 21 | 11 |
| 3 | 10 | 02 | 23 | 33 |

XOR-randomisierte Tabelle mit
Eingangsmaske 31 und Ausgangsmaske 00      Fig. 8

|   | 0 | 1 | 2 | 3 |
|---|---|---|---|---|
| 0 | 00 | 12 | 31 | 21 |
| 1 | 32 | 01 | 13 | 23 |
| 2 | 10 | 02 | 03 | 30 |
| 3 | 22 | 11 | 33 | 20 |

XOR-randomisierte Tabelle mit
Eingangsmaske 00 und Ausgangsmaske 02      Fig. 9

|   | 0 | 1 | 2 | 3 |
|---|---|---|---|---|
| 0 | 11 | 22 | 20 | 33 |
| 1 | 02 | 10 | 30 | 03 |
| 2 | 01 | 32 | 23 | 13 |
| 3 | 12 | 00 | 21 | 31 |

XOR-randomisierte Tabelle mit
Eingangsmaske 31 und Ausgangsmaske 02      Fig. 10

1x = Ein- und Ausgang invertiert

|     | 00 | 01 | 02 | 03 | 10 | 11 | 12 | 13 |
|-----|----|----|----|----|----|----|----|----|
| 0   | 11 | 22 | 20 | 33 | 02 | 12 | 33 | 21 |
| 1   | 02 | 10 | 30 | 03 | 20 | 10 | 01 | 32 |
| 2   | 01 | 32 | 23 | 13 | 30 | 03 | 23 | 31 |
| 3   | 12 | 00 | 21 | 31 | 00 | 13 | 11 | 22 |

Einfach erweiterte XOR-randomisierte Tabelle
mit Eingangsmaske 31 und Ausgangsmaske 02

**Fig. 11**

1x = Eingang invertiert

|     | 00 | 01 | 02 | 03 | 10 | 11 | 12 | 13 |
|-----|----|----|----|----|----|----|----|----|
| 00  | 11 | 22 | 20 | 33 | 31 | 21 | 00 | 12 |
| 01  | 02 | 10 | 30 | 03 | 13 | 23 | 32 | 01 |
| 02  | 01 | 32 | 23 | 13 | 03 | 30 | 10 | 02 |
| 03  | 12 | 00 | 21 | 31 | 33 | 20 | 22 | 11 |
| 10  | 22 | 11 | 13 | 00 | 02 | 12 | 33 | 21 |
| 11  | 31 | 23 | 03 | 30 | 20 | 10 | 01 | 32 |
| 12  | 32 | 01 | 10 | 20 | 30 | 03 | 23 | 31 |
| 13  | 21 | 33 | 12 | 02 | 00 | 13 | 11 | 22 |

1x = Ausgang invertiert

Zweifach erweiterte XOR-randomisierte Tabelle
mit Eingangsmaske 31 und Ausgangsmaske 02

**Fig. 12**

|   | 0 | 1 | 2 | 3 |
|---|---|---|---|---|
| 0 | 23 | 30 | 03 | 11 |
| 1 | 21 | 12 | 00 | 01 |
| 2 | 32 | 20 | 13 | 31 |
| 3 | 22 | 02 | 10 | 33 |

additiv randomisierte Tabelle mit
Eingangsmaske 31 und Ausgangsmaske 00

Fig. 13

|   | 0 | 1 | 2 | 3 |
|---|---|---|---|---|
| 0 | 10 | 12 | 01 | 31 |
| 1 | 32 | 11 | 13 | 23 |
| 2 | 20 | 02 | 03 | 00 |
| 3 | 22 | 21 | 33 | 30 |

additiv randomisierte Tabelle mit
Eingangsmaske 00 und Ausgangsmaske 02

Fig. 14

|   | 0 | 1 | 2 | 3 |
|---|---|---|---|---|
| 0 | 31 | 32 | 11 | 13 |
| 1 | 23 | 20 | 02 | 03 |
| 2 | 00 | 22 | 21 | 33 |
| 3 | 30 | 10 | 12 | 01 |

additiv randomisierte Tabelle mit
Eingangsmaske 31 und Ausgangsmaske 02

Fig. 15

1x = Ein- und Ausgang invertiert

|   | 00 | 01 | 02 | 03 | 10 | 11 | 12 | 13 |
|---|----|----|----|----|----|----|----|----|
| **0** | 31 | 32 | 11 | 13 | 32 | 21 | 23 | 03 |
| **1** | 23 | 20 | 02 | 03 | 00 | 12 | 11 | 33 |
| **2** | 00 | 22 | 21 | 33 | 30 | 31 | 13 | 10 |
| **3** | 30 | 10 | 12 | 01 | 20 | 22 | 01 | 02 |

Einfach erweiterte additiv randomisierte Tabelle
mit Eingangsmaske 31 und Ausgangsmaske 02

**Fig. 16**

1x = Eingang invertiert

|   | 00 | 01 | 02 | 03 | 10 | 11 | 12 | 13 |
|---|----|----|----|----|----|----|----|----|
| **00** | 31 | 32 | 11 | 13 | 01 | 12 | 10 | 30 |
| **01** | 23 | 20 | 02 | 03 | 33 | 21 | 22 | 00 |
| **02** | 00 | 22 | 21 | 33 | 03 | 02 | 20 | 23 |
| **03** | 30 | 10 | 12 | 01 | 13 | 11 | 32 | 31 |
| **10** | 02 | 01 | 22 | 20 | 32 | 21 | 23 | 03 |
| **11** | 10 | 13 | 31 | 30 | 00 | 12 | 11 | 33 |
| **12** | 33 | 11 | 12 | 00 | 30 | 31 | 13 | 10 |
| **13** | 03 | 23 | 21 | 32 | 20 | 22 | 01 | 02 |

1x = Ausgang invertiert

Zweifach erweiterte additiv randomisierte Tabelle
mit Eingangsmaske 31 und Ausgangsmaske 02

**Fig. 17**

|   | 0 | 1 | 2 | 3 |
|---|---|---|---|---|
| 0 | 23 | 30 | 03 | 11 |
| 1 | 21 | 12 | 00 | 01 |
| 2 | 32 | 20 | 13 | 31 |
| 3 | 22 | 02 | 10 | 33 |

gemischt randomisierte Tabelle mit additiver
Eingangsmaske 31 und XOR-Ausgangsmaske 00      Fig. 18

|   | 0 | 1 | 2 | 3 |
|---|---|---|---|---|
| 0 | 00 | 12 | 31 | 21 |
| 1 | 32 | 01 | 13 | 23 |
| 2 | 10 | 02 | 03 | 30 |
| 3 | 22 | 11 | 33 | 20 |

gemischt randomisierte Tabelle mit additiver
Eingangsmaske 00 und XOR-Ausgangsmaske 02      Fig. 19

|   | 0 | 1 | 2 | 3 |
|---|---|---|---|---|
| 0 | 21 | 32 | 01 | 13 |
| 1 | 23 | 10 | 02 | 03 |
| 2 | 30 | 22 | 11 | 33 |
| 3 | 20 | 00 | 12 | 31 |

gemischt randomisierte Tabelle mit additiver
Eingangsmaske 31 und XOR-Ausgangsmaske 02      Fig. 20

1x = Ein- und Ausgang invertiert

| | 00 | 01 | 02 | 03 | 10 | 11 | 12 | 13 |
|---|---|---|---|---|---|---|---|---|
| 0 | 21 | 32 | 01 | 13 | 02 | 21 | 33 | 13 |
| 1 | 23 | 10 | 02 | 03 | 00 | 22 | 11 | 03 |
| 2 | 30 | 22 | 11 | 33 | 30 | 31 | 23 | 10 |
| 3 | 20 | 00 | 12 | 31 | 20 | 32 | 01 | 12 |

einfach erweiterte gemischt randomisierte Tabelle
mit additviver Eingangsmaske 31
und XOR-Ausgangsmaske 02

Fig. 21

1x = Eingang invertiert

| 1x = Ausgang invertiert | | 00 | 01 | 02 | 03 | 10 | 11 | 12 | 13 |
|---|---|---|---|---|---|---|---|---|---|
| | 00 | 21 | 32 | 01 | 13 | 31 | 12 | 00 | 20 |
| | 01 | 23 | 10 | 02 | 03 | 33 | 11 | 22 | 30 |
| | 02 | 30 | 22 | 11 | 33 | 03 | 02 | 10 | 23 |
| | 03 | 20 | 00 | 12 | 31 | 13 | 01 | 32 | 21 |
| | 10 | 12 | 01 | 32 | 20 | 02 | 21 | 33 | 13 |
| | 11 | 10 | 23 | 31 | 30 | 00 | 22 | 11 | 03 |
| | 12 | 03 | 11 | 22 | 00 | 30 | 31 | 23 | 10 |
| | 13 | 13 | 33 | 21 | 02 | 20 | 32 | 01 | 12 |

zweifach erweiterte gemischt randomisierte Tabelle
mit additiver Eingangsmaske 31
und XOR-Ausgangsmaske 02

Fig. 22

|   | 0 | 1 | 2 | 3 |
|---|---|---|---|---|
| 0 | 00 | 11 | 22 | 33 |
| 1 | 13 | 02 | 31 | 20 |
| 2 | 32 | 23 | 10 | 01 |
| 3 | 21 | 30 | 03 | 12 |

Multiplikations-Tabelle
für 11 bzgl Minimal-Polynom 103

**Fig. 23**

|   | 0 | 1 | 2 | 3 |
|---|---|---|---|---|
| 0 | 00 | 23 | 11 | 32 |
| 1 | 22 | 01 | 33 | 10 |
| 2 | 13 | 30 | 02 | 21 |
| 3 | 31 | 12 | 20 | 03 |

invertierte Multiplikations-Tabelle
für 11 bzgl Minimal-Polynom 103

**Fig. 24**

|   | 0 | 1 | 2 | 3 |
|---|---|---|---|---|
| 0 | 22 | 03 | 33 | 30 |
| 1 | 11 | 13 | 10 | 21 |
| 2 | 23 | 32 | 12 | 00 |
| 3 | 20 | 02 | 31 | 01 |

affin randomisierte Tabelle mit
Eingangsmaske 00 und Ausgangsmaske 00 und
multiplikativer Maske 11 bzgl Minimal-Polynom 103

**Fig. 25**

|   | 0 | 1 | 2 | 3 |
|---|---|---|---|---|
| 0 | 02 | 20 | 01 | 31 |
| 1 | 32 | 23 | 00 | 12 |
| 2 | 13 | 11 | 21 | 10 |
| 3 | 03 | 22 | 30 | 33 |

affin randomisierte Tabelle mit
Eingangsmaske 31 und Ausgangsmaske 00 und
multiplikativer Maske 11 bzgl Minimal-Polynom 103

Fig. 26

|   | 0 | 1 | 2 | 3 |
|---|---|---|---|---|
| 0 | 20 | 01 | 31 | 32 |
| 1 | 13 | 11 | 12 | 23 |
| 2 | 21 | 30 | 10 | 02 |
| 3 | 22 | 00 | 33 | 03 |

affin randomisierte Tabelle mit
Eingangsmaske 00 und Ausgangsmaske 02 und
multiplikativer Maske 11 bzgl Minimal-Polynom 103

Fig. 27

|   | 0 | 1 | 2 | 3 |
|---|---|---|---|---|
| 0 | 00 | 22 | 03 | 33 |
| 1 | 30 | 21 | 02 | 10 |
| 2 | 11 | 13 | 23 | 12 |
| 3 | 01 | 20 | 32 | 31 |

affin randomisierte Tabelle mit
Eingangsmaske 31 und Ausgangsmaske 02 und
multiplikativer Maske 11 bzgl Minimal-Polynom 103

Fig. 28

1x = Ein- und Ausgang invertiert

|   | 00 | 01 | 02 | 03 | 10 | 11 | 12 | 13 |
|---|----|----|----|----|----|----|----|----|
| 0 | 00 | 22 | 03 | 33 | 02 | 01 | 13 | 32 |
| 1 | 30 | 21 | 02 | 10 | 21 | 10 | 20 | 22 |
| 2 | 11 | 13 | 23 | 12 | 23 | 31 | 12 | 03 |
| 3 | 01 | 20 | 32 | 31 | 00 | 30 | 11 | 33 |

einfach erweiterte affin randomisierte Tabelle mit
Eingangsmaske 31 und Ausgangsmaske 02 und
multiplikativer Maske 11 bzgl Minimal-Polynom 103

Fig. 29

1x = Eingang invertiert

|    | 00 | 01 | 02 | 03 | 10 | 11 | 12 | 13 |
|----|----|----|----|----|----|----|----|----|
| 00 | 00 | 22 | 03 | 33 | 31 | 32 | 20 | 01 |
| 01 | 30 | 21 | 02 | 10 | 12 | 23 | 13 | 11 |
| 02 | 11 | 13 | 23 | 12 | 10 | 02 | 21 | 30 |
| 03 | 01 | 20 | 32 | 31 | 33 | 03 | 22 | 00 |
| 10 | 33 | 11 | 30 | 00 | 02 | 01 | 13 | 32 |
| 11 | 03 | 12 | 31 | 23 | 21 | 10 | 20 | 22 |
| 12 | 22 | 20 | 10 | 21 | 23 | 31 | 12 | 03 |
| 13 | 32 | 13 | 01 | 02 | 00 | 30 | 11 | 33 |

1x = Ausgang invertiert

zweifach erweiterte affin randomisierte Tabelle mit
Eingangsmaske 31 und Ausgangsmaske 02 und
multiplikativer Maske 11 bzgl Minimal-Polynom 103

Fig. 30

**IN DER BESCHREIBUNG AUFGEFÜHRTE DOKUMENTE**

**In der Beschreibung aufgeführte Patentdokumente**

- DE 19822217 A1
- WO 0131422 A2
- EP 2302552 A1

**In der Beschreibung aufgeführte Nicht-Patentliteratur**

- **M. Z. RAHAMAN et al.** Side Channel Attack Prevention for AES Smart Card. *Proceedings of 11th International Conference on Computer and Information Technology, ICCIT,* 25. Dezember 2008
- Higher Order Masking of the AES. **K. SCHRAMM ; C. PAAR.** CT-RSA 2006. Springer, 2006, vol. 3860, 208-225
- Block Ciphers Implementations Provably Secure Against Second Order Side Channel Analysis. **MATTHIEU RIVAIN ; EMMANUELLE DOTTAX ; EMMANUEL PROUFF.** Fast Software Encryption-FSE 2008. Springer, 2008, vol. 5086, 127-143
- **E. PROUFF ; M. RIVAIN ; R. BEVAN.** Statistical Analysis of Second Order Differential Power Analysis. *IEEE Transactions on Computers,* 2009, vol. 58, 799.811, http://eprint.iacr.org/2010/646.pdf
- Thwarting High-Order Side Channel Analysis with Additive and Multiplicative Maskings. **L. GENELLE ; E. PROUFF ; M. QUISQUATER.** Cryptographic Hardware and Embedded Systems - CHES 2011. Springer, 2011, vol. 6917, 240-255
- A Fast and Provable Secure Higher Order Masking of AES S-Box. **H. KIM ; S. HONG ; J. LIM.** Cryptographic Hardware and Embedded Systems - CHES 2011. Springer, 2011, vol. 6917, 95-107